# EUROPEAN PATENT APPLICATION

(11) **EP 4 333 561 A1**
(43) Date of publication of application: **06.03.2024**
(21) Application number: 22870204.9
(22) Date of filing: 07.09.2022
(51) Int. Cl.: H05B 6/06, H05B 6/12, H02J 50/10, H02J 7/00

(54) **SENSOR DEVICE, INDUCTION HEATING DEVICE, AND COOKING SYSTEM**

(30) Priority: 17.09.2021 KR 20210125251
(71) Applicant: Samsung Electronics Co., Ltd., Suwon-si, Gyeonggi-do 16677 (KR)
(72) Inventor: JEE, Yongkeun, Suwon-si, Gyeonggi-do 16677 (KR); CHANG, Kyungah, Suwon-si, Gyeonggi-do 16677 (KR); HA, Jonghun, Suwon-si, Gyeonggi-do 16677 (KR)
(74) Representative: Walaski, Jan Filip
(86) International application number: PCT/KR2022/013437
(87) International publication number: WO 2023/043119

(57) **Abstract**

A sensor device, induction heating device, and cooking system including, in the sensor device, a first temperature sensor, a second temperature sensor, a communication interface, and a processor. The first temperature sensor measures a temperature of a food being in a cooking vessel on the induction heating device. The second temperature sensor measures an internal temperature of the sensor device. The communication interface transmits the data to the induction heating device to control cooking. The processor controls the communication interface to transmit the data the induction heating device.

## Description

### TECHNICAL FIELD

The disclosure relates to a sensor device, an induction heating device, and a cooking system.

### BACKGROUND ART

A temperature sensor refers to a sensor for detecting a change in temperature and converting the same into a measurable signal. The temperature sensor is divided into a contact temperature sensor and a non-contact temperature sensor. Commonly used thermocouples, thermistors, and resistance temperature detectors (RTDs) are all contact temperature sensors. A thermistor is a semiconductor obtained by mixing and sintering two or three types of materials to exhibit a significant change in resistance due to a change in temperature, and measures temperature by using high sensitivity to changes in ambient temperature. The thermistor is widely used in thermometers, hygrometers, barometers, anemometers, and microwave power meters. The thermistor has a measurable temperature range of -40 °C to 300 °C , is very sensitive, and is greatly affected by self-heating.

The temperature sensor may be used to measure a temperature of food. The temperature sensor may be attached to a pot to measure the temperature of food. According to the related art, two methods have been used to attach the temperature sensor to the pot. A first method is to adhere an additional pad onto the pot to attach the temperature sensor thereto, and a second method is to provide the temperature sensor with a magnet to stick to an induction pot. Using the first method, the pad adhesion is reduced when the pot is washed and so should be replaced, and every pot needs a pad, thereby reducing efficiency of use. Using the second method, when only the bottom of the induction pot is made of iron and the other parts thereof are made of stainless steel, the magnet of the temperature sensor may not easily stick to the pot. Therefore, a method capable of stably mounting the temperature sensor on the pot is required.

In addition, when the temperature sensor is supplied with power in a wired manner, the temperature sensor may not be freely used while cooking due to limitations of its length and directionality. On the other hand, although a capacitor is embedded in the temperature sensor, when the temperature sensor is exposed to high temperature while cooking, the capacitor may experience a rapid reduction in lifetime. Therefore, a system capable of enabling stable use of the temperature sensor while cooking is required.

Meanwhile, a general temperature sensor simply displays a temperature value by using its display. In this case, a user who is not a professional cook may not cook skillfully by merely checking the temperature value of the food, which is output from the temperature sensor. Therefore, a system in which the temperature sensor operates in association with an induction cooktop to assist the user in cooking may be required.

### DESCRIPTION OF EMBODIMENTS

### SOLUTION TO PROBLEM

According to an embodiment of the disclosure, a sensor device can include: a communication interface configured to communicate with an induction heating device; a first temperature sensor configured to measure a temperature of a food while in contact with the food, the food being in a cooking vessel on the induction heating device; a second temperature sensor configured to measure an internal temperature of the sensor device; and at least one processor configured to control the communication interface to transmit data indicating the temperature of the food measured by the first temperature sensor and data indicating the internal temperature of the sensor device measured by the second temperature sensor to the induction heating device.

The sensor device of can include a sensor body housing the first temperature sensor, the second temperature sensor, the communication interface, and the at least one processor. The sensor device can include a charger including a transmitter coil configured to wirelessly transmit energy.

The sensor body can include a receiver coil configured to wirelessly receive energy transmitted by the transmitter coil, and a capacitor configured to store the received energy. The capacitor can be a supercapacitor.

The second temperature sensor can be positioned within a preset distance from the capacitor.

The sensor body can be configured to be insertable into an internal cavity of the charger, the transmitter coil can be wound along an axis direction, the receiver coil can be wound along a same axis direction as the transmitter coil, and the transmitter coil can be positioned such that, when the sensor body is inserted into the internal cavity of the charger, the transmitter coil is outside the receiver coil.

The charger can include a charging surface in which the transmitter coil is wound in an oval shape, and the sensor body can be mountable in the charger, and the receiver coil can be wound in an oval shape in the sensor body at a position that, when the sensor body is mounted in the charger and in contact with the charging surface, the receiver coil is aligned with the transmitter coil.

The sensor body can be configured to transmit information about a level of charge of the capacitor to the charger through power frequency communication.

The charger can include an output interface configured to display the information about the level of charge of the capacitor.

When the capacitor is charged, the output interface can be further configured to: output a first color when the level of charge of the capacitor is lower than or equal to a first threshold value, output a second color, different from the first color, when the level of charge of the capacitor is higher than the first threshold value and lower than a second threshold value that is higher than the first threshold value, and output a third color, different from the first color and from the second color, when the level of charge of the capacitor is equal to or higher than the second threshold value.

The at least one processor can be further configured to identify a level of charge of the capacitor; and transmit, through the communication interface, information about the identified level of charge of the capacitor to the induction heating device.

The at least one processor can be further configured to receive, through the communication interface, information about a data transmission cycle from the induction heating device; and control the communication interface to transmit the data indicating the temperature of the food as measured by the first temperature sensor and the data indicating the internal temperature of the sensor device as measured by the second temperature sensor to the induction heating device according to the received information about the data transmission cycle.

The data transmission cycle can be based on a cooking time of a cooking mode of the induction heating device.

According to an embodiment of the disclosure, a cooking system can include: an induction heating device; and a sensor device including: a first communication interface configured to communicate with the induction heating device; a first temperature sensor configured to measure a temperature of food in a cooking vessel on the induction heating device, a second temperature sensor configured to measure an internal temperature of the sensor device, and at least one first processor configured to control the first communication interface to transmit data indicating the temperature of the food as measured by the first temperature sensor and data indicating the internal temperature of the sensor device as measured by the second temperature sensor to the induction heating device, wherein the induction heating device includes: a second communication interface configured to receive, from the sensor device, the data indicating the temperature of the food as measured by the first temperature sensor and the data indicating the internal temperature of the sensor device as measured by the second temperature sensor, and at least one second processor configured to control an operation of the induction heating device based on the received data, wherein the operation includes at least one of: providing a notification to a user through a user interface when the data indicating the internal temperature of the sensor device as measured by the second temperature sensor is higher than or equal to a preset reference temperature data, and controlling a power level of the induction heating device when the data indicating internal temperature of the sensor device as measured by the second temperature sensor is higher than or equal to the preset reference temperature data.

The sensor device can further comprise a sensor body housing the first temperature sensor, the second temperature sensor, the first communication interface, and the at least one first processor; and a charger including a transmitter coil configured to wirelessly transmit energy. The sensor body can further comprise a receiver coil configured to wirelessly receive energy the transmitted by the transmitter coil; and a capacitor configured to store the received energy.

The second temperature sensor can be positioned within a preset distance from the capacitor.

The sensor body can be configured to transmit data indicating a level of charge of the capacitor to the charger through power frequency communication, and the charger can be configured to receive, from the sensor body, the data indicating the level of charge of the capacitor, and the charger can be configured to display, through an output interface, information based on the received data indicating the level of charge of the capacitor.

The sensor device can be configured to transmit data indicating a level of charge of the capacitor to the induction heating device through the first communication interface, and the induction heating device can be configured to: receive from the sensor device the data indicating the level of charge of the capacitor, and to output a notification about the level of charge of the capacitor through the user interface when the received data indicating the level of charge of the capacitor indicates that the level of charge of the capacitor is lower than a threshold value.

The induction heating device can include pre-stored recipe information, and the induction heating device can be configured to: perform automatic cooking by adjusting the power level of the induction heating device in accordance with the data indicating the temperature of the food as measured by the first temperature sensor and the pre-stored recipe information, or output a notification indicating a cooking instruction through the user interface, in accordance with the data indicating the temperature of the food as measured by the first temperature sensor and the pre-stored recipe information.

The induction heating device can be configured to determine a data transmission cycle of the sensor device based on a cooking time of a cooking mode that is selected on the induction heating device, and transmit information about the data transmission cycle to the sensor device through the second communication interface, and the sensor device can be configured to: receive the information about the data transmission cycle through the first communication interface, and transmit the data indicating the temperature of the food as measured by the first temperature sensor and the data indicating internal temperature of the sensor device as measured by the second temperature sensor to the induction heating device according to the received information about the data transmission cycle.

The induction heating device can be configured to determine, according to received data indicating the temperature of the food as measured by the first temperature sensor, when a change in food temperature during a preset time is less than a threshold change value, and after determining that the change in food temperature during the preset time is less than the threshold change value, output through the user interface an instruction to a user.

The instruction can include one of checking the position of the sensor device, mounting the sensor device on the cooking vessel, or changing the position of the sensor device.

### BRIEF DESCRIPTION OF DRAWINGS

The above and other aspects, features, and advantages of certain embodiments of the present disclosure will be more apparent from the following detailed description, taken in conjunction with the accompanying drawings, in which:
FIG. 1 is a diagram for describing a cooking system according to an embodiment of the disclosure.
FIG. 2A is a block diagram for describing functions of a sensor device according to an embodiment of the disclosure.
FIG. 2B is a block diagram for describing functions of a sensor device according to an embodiment of the disclosure.
FIG. 3A is a diagram for describing an external structure of a sensor device according to an embodiment of the disclosure.
FIG. 3B is a diagram for describing an internal structure of a sensor device according to an embodiment of the disclosure.
FIG. 4 is a diagram for describing a structure for wirelessly charging a sensor device in a specific direction, according to an embodiment of the disclosure.
FIG. 5 is a diagram for describing a structure for wirelessly charging a sensor device in a non-specific direction, according to an embodiment of the disclosure.
FIG. 6 is a diagram for describing an external structure of a sensor device according to another embodiment of the disclosure.
FIG. 7 is a diagram for describing a structure of a sensor device including an oval-shaped transmitter coil and an oval-shaped receiver coil, according to an embodiment of the disclosure.
FIG. 8 is a block diagram for describing functions of an induction heating device according to an embodiment of the disclosure.
FIG. 9 is a flowchart for describing a method of operating a sensor device and an induction heating device, according to an embodiment of the disclosure.
FIG. 10 is a diagram for describing an operation, performed by an induction heating device, of outputting notification information when internal temperature data of a sensor device is higher than or equal to reference temperature data, according to an embodiment of the disclosure.
FIG. 11 is a diagram for describing a change in internal temperature data due to a change in position of a sensor device, according to an embodiment of the disclosure.
FIG. 12 is a diagram for describing a change in internal temperature data due to a control of a power level of an induction heating device, according to an embodiment of the disclosure.
FIG. 13 is a flowchart for describing a method, performed by an induction heating device, of controlling operation when internal temperature data is higher than or equal to reference temperature data, according to an embodiment of the disclosure.
FIG. 14 is a flowchart for describing a method, performed by an induction heating device, of outputting a notification about a level of charge of a capacitor of a sensor device, according to an embodiment of the disclosure.
FIG. 15 is a diagram for describing an operation, performed by an induction heating device, of outputting a notification about a level of charge of a capacitor of a sensor device, according to an embodiment of the disclosure.
FIG. 16 is a flowchart for describing a method, performed by an induction heating device, of outputting guide information for a steak in association with a sensor device, according to an embodiment of the disclosure.
FIG. 17 is a diagram for describing an operation, performed by an induction heating device, of outputting guide information for a steak in association with a sensor device, according to an embodiment of the disclosure.
FIG. 18 is a flowchart for describing a method, performed by an induction heating device, of outputting guide information for a stew in association with a sensor device, according to an embodiment of the disclosure.
FIG. 19 is a diagram for describing an operation, performed by an induction heating device, of outputting guide information for a stew in association with a sensor device, according to an embodiment of the disclosure.
FIG. 20 is a flowchart for describing a method, performed by an induction heating device, of determining a data transmission cycle of a sensor device, according to an embodiment of the disclosure.
FIG. 21 is a diagram for describing an operation, performed by an induction heating device, of determining a data transmission cycle of a sensor device in a long-time cooking mode, according to an embodiment of the disclosure.
FIG. 22 is a diagram for describing an operation, performed by an induction heating device, in association with a sensor device, according to an embodiment of the disclosure.

### MODE OF DISCLOSURE

Terminology used in this specification will now be briefly described before describing embodiments of the disclosure in detail.

Throughout the disclosure, the expression "at least one of a, b or c" indicates only a, only b, only c, both a and b, both a and c, both b and c, all of a, b, and c, or variations thereof.Although the terms used herein are selected, as much as possible, from general terms that are widely used at present while taking into consideration the functions obtained in accordance with the disclosure, these terms may be replaced by other terms based on intentions of one of ordinary skill in the art, customs, emergence of new technologies, or the like. In a particular case, terms that are arbitrarily selected by the applicant may be used and, in that case, the meanings of these terms may be described in relevant parts of the disclosure. Therefore, it is noted that the terms used herein are construed based on practical meanings thereof and the whole content of this specification, rather than being simply construed based on names of the terms.

It will be understood that the terms "comprises", "comprising", "includes" and/or "including", when used herein, specify the presence of stated elements, but do not preclude the presence or addition of one or more other elements, unless otherwise indicated herein. As used herein, the term "unit" or "module" denotes an entity for performing at least one function or operation, and may be implemented as hardware, software, or a combination of hardware and software.

Hereinafter, the disclosure will be described in detail by explaining embodiments of the disclosure with reference to the attached drawings. The disclosure may, however, be embodied in many different forms and should not be construed as being limited to the embodiments of the disclosure set forth herein. In the drawings, parts not related to the disclosure are not illustrated for clarity of explanation, and like reference numerals denote like elements throughout.

Disclosed herein is a sensor device including a first temperature sensor configured to measure a temperature of food in a cooking vessel, and a second temperature sensor configured to measure an internal temperature of the sensor device, and capable of enabling safe cooking by sharing food temperature data and internal temperature data with an induction heating device.

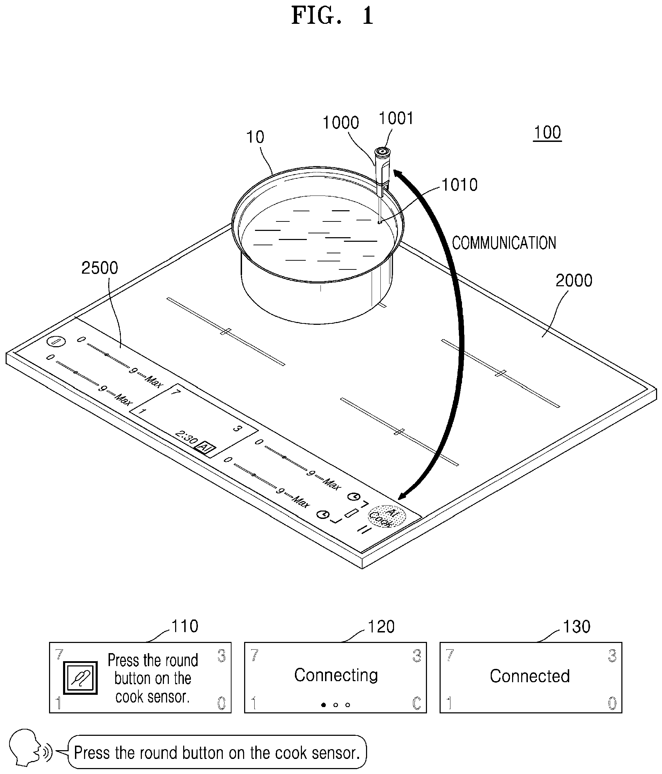

FIG. 1 is a diagram for describing a cooking system 100 according to an embodiment of the disclosure.

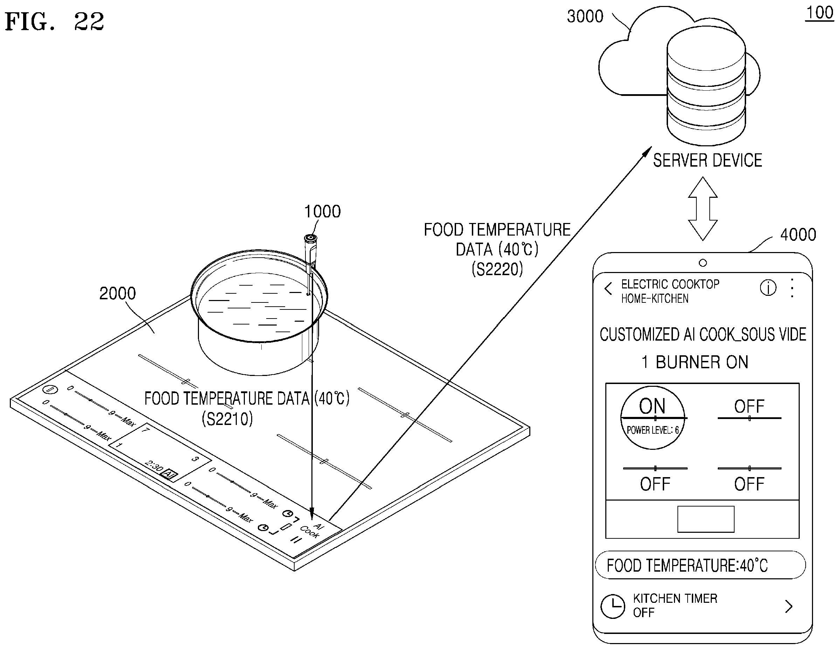

Referring to FIG. 1, the cooking system 100 according to an embodiment of the disclosure may include a sensor device 1000 and an induction heating device 2000. However, not all of the illustrated elements are essential. The cooking system 100 may be implemented with more elements than the illustrated elements or may be implemented with fewer elements than the illustrated elements. For example, the cooking system 100 may be implemented with the sensor device 1000, the induction heating device 2000, and a server device (not shown). An embodiment in which the cooking system 100 includes the server device will be described in detail below with reference to FIG. 22.

The sensor device 1000 may be a device mounted on a cooking vessel 10 or inserted into food in the cooking vessel 10 to measure a temperature of the food. For example, the sensor device 1000 may include a first temperature sensor 1010 for measuring the temperature of the food while in contact with the food in the cooking vessel 10.

According to an embodiment of the disclosure, the cooking vessel 10 may be a device for warming a content of the cooking vessel 10. For example, the cooking vessel 10 may include a pot, a frying pan, a steamer, a kettle, a teapot, a coffee pot, or a rice cooker, but is not limited thereto. The cooking vessel 10 may include various types of magnetic vessels that may be inductively heated by the induction heating device 2000. Induction heating (IH) refers to a method of heating a metallic object by using electromagnetic induction. For example, when an alternating current (AC) is supplied to a working coil of the induction heating device 2000, a temporally varying magnetic field is induced inside the working coil. The magnetic field generated by the working coil passes through a bottom surface of the cooking vessel 10. When the temporally varying magnetic field passes through metal (e.g., iron, steel nickel, or various types of alloys) included in the bottom surface of the cooking vessel 10, a current rotating around the magnetic field is generated in the metal. The rotating current is called an eddy current, and the phenomenon in which a current is induced by the temporally varying magnetic field is called electromagnetic induction. When the cooking vessel 10 is an induction heating (IH)-type cooking vessel, heat is generated in the bottom surface of the cooking vessel 10 by the eddy current and a resistance of the metal (e.g., iron). The heat generated in this case may heat the content of the cooking vessel 10. The content of the cooking vessel 10 may be a liquid such as water, tea, coffee, soup, juice, or wine, or a solid such as butter, but is not limited thereto.

The sensor device 1000 according to an embodiment of the disclosure may include a communication interface for communicating with an external device. For example, the sensor device 1000 may communicate with the induction heating device 2000 through the communication interface. The communication interface may include a short-range wireless communication interface and a mobile communication interface. The short-range wireless communication interface may include a Bluetooth communication interface, a Bluetooth Low Energy (BLE) communication interface, a near field communication (NFC) interface, a wireless local area network (WLAN) (or Wi-Fi) communication interface, a Zigbee communication interface, an Infrared Data Association (IrDA) communication interface, a Wi-Fi Direct (WFD) communication interface, an ultra-wideband (UWB) communication interface, or an Ant+ communication interface, but is not limited thereto.

According to an embodiment of the disclosure, the sensor device 1000 may include a button for establishing a communication channel with the induction heating device 2000. For example, the sensor device 1000 may include a pairing button 1001. The pairing button 1001 may have various shapes, but will be representatively described as having a round shape in relation to FIG. 1. When a user presses or touches the pairing button 1001, the sensor device 1000 may operate in a sensing mode to allow the induction heating device 2000 to detect the sensor device 1000. 'Pairing' refers to a procedure for checking a password, identification information, security information, or authentication information designated for a communication connection between the sensor device 1000 and the induction heating device 2000 which support, for example, a Bluetooth function. The sensor device 1000 may be paired with the induction heating device 2000 to establish a Bluetooth communication channel therebetween. Establishing the Bluetooth communication channel may mean enabling the sensor device 1000 and the induction heating device 2000 to transmit and receive data therebetween through Bluetooth communication.

The sensor device 1000 according to an embodiment of the disclosure may transmit identification information of the sensor device 1000 to the induction heating device 2000 through the communication interface. As unique information for identifying the sensor device 1000, the identification information of the sensor device 1000 may include at least one of a medium access control (MAC) address, a model name, device type information, manufacturer information (e.g., a manufacture ID), or a serial number, but is not limited thereto. According to an embodiment of the disclosure, the identification information of the sensor device 1000 may be expressed as a series of identification numbers or a combination of numbers and alphabets.

The sensor device 1000 according to an embodiment of the disclosure may monitor the temperature of the content of the cooking vessel 10, and transmit data indicating the food temperature (also referred to herein as "food temperature data") to the induction heating device 2000 through the communication interface. According to an embodiment of the disclosure, the sensor device 1000 may transmit the temperature information of the content to the induction heating device 2000 in a certain cycle or when a specific event occurs (e.g., when a request is received from the induction heating device 2000). According to an embodiment of the disclosure, the induction heating device 2000 may perform automatic cooking by controlling a power level or provide recipe-based cooking guide information to the user, based on the temperature information of the content.

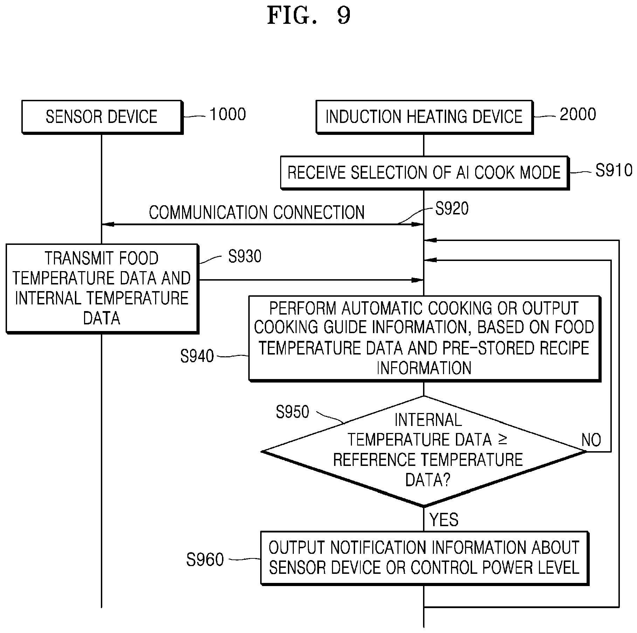

Meanwhile, the sensor device 1000 according to an embodiment of the disclosure may include a second temperature sensor for measuring an internal temperature of the sensor device 1000. The sensor device 1000 may transmit, to the induction heating device 2000 through the communication interface, data indicating the internal temperature measured by the second temperature sensor (also referred to herein as "internal temperature data"). In this case, the induction heating device 2000 may monitor the internal temperature data of the sensor device 1000, and output a notification (e.g., a notification instructing to change a position of the sensor device 1000) to the user or control the power level of the induction heating device 2000 when the internal temperature of the sensor device 1000 is higher than or equal to a reference temperature. As such, a reduction in lifetime of an internal component of the sensor device 1000 or explosion of a capacitor of the sensor device 1000 may be prevented. The operation, performed by the induction heating device 2000, of monitoring the internal temperature of the sensor device 1000 will be described in detail below with reference to FIG. 9.

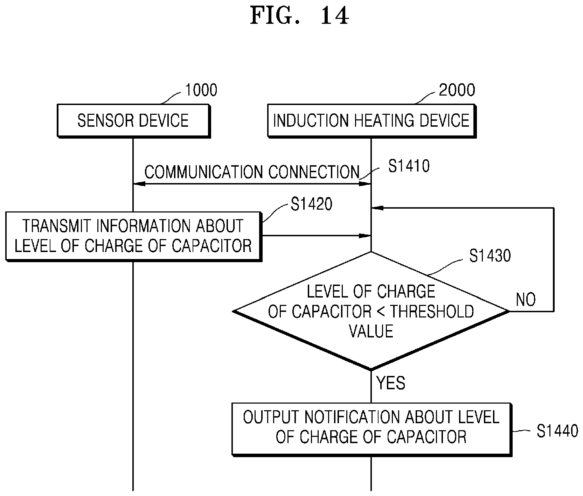

According to an embodiment of the disclosure, the sensor device 1000 may include a capacitor for storing energy wirelessly supplied from a charger. In this case, the sensor device 1000 may transmit information about a level of charge of the capacitor to the induction heating device 2000 through the communication interface. When the level of charge of the capacitor is lower than a threshold value, the induction heating device 2000 may output a notification about the level of charge of the capacitor through a user interface 2500. The user interface 2500 may include an output interface. For example, the induction heating device 2000 may output, through the user interface 2500, a notification indicating that the level of charge of the capacitor is not sufficient or a notification instructing to charge the capacitor. The operation, performed by the sensor device 1000, of transmitting the information about the capacitor to the induction heating device 2000 will be described in detail below with reference to FIG. 14.

The induction heating device 2000 according to an embodiment of the disclosure may be a device for wirelessly transmitting power to a target object (e.g., the cooking vessel 10) positioned on a top plate, by using electromagnetic induction. The induction heating device 2000 may also be called an induction cooktop or an electric stove. The electric stove may include a hot plate or a radiant cooktop. The hot plate is a heating device for directly transferring heat from a high-temperature iron plate to the cooking vessel 10, and the radiant cooktop is a heating device for radiating heat from heating wires under a ceramic plate to heat the cooking vessel 10.

Meanwhile, the disclosure is focused on an embodiment in which the sensor device 1000 operates in association with the induction heating device 2000, but is not limited thereto. For example, the sensor device 1000 may operate in association with a gas stove and, in this case, the gas stove may perform various operations of the induction heating device 2000 to be described below.

The induction heating device 2000 may include a working coil for generating a magnetic field to inductively heat the cooking vessel 10. According to an embodiment of the disclosure, the induction heating device 2000 may include a plurality of working coils. For example, when the top plate of the induction heating device 2000 includes a plurality of cooking zones, the induction heating device 2000 may include a plurality of working coils separately corresponding to the plurality of cooking zones. The induction heating device 2000 may include a high-power cooking zone where a first working coil is provided at an inner side and a second working coil is provided at an outer side. The high-power cooking zone may include three or more working coils.

The top plate of the induction heating device 2000 according to an embodiment of the disclosure may be made of tempered glass such as ceramic glass so as not to be easily broken. Guide marks indicating the cooking zones where the cooking vessel 10 needs to be positioned may be provided on the top plate of the induction heating device 2000.

According to an embodiment of the disclosure, the induction heating device 2000 may include a communication interface for communicating with an external device. For example, the induction heating device 2000 may communicate with the sensor device 1000 or a server device (not shown) through the communication interface. The communication interface may include a short-range wireless communication interface (e.g., an NFC communication interface or a Bluetooth communication interface) and a mobile communication interface.

According to an embodiment of the disclosure, when an input for selecting an artificial intelligence (Al) cook button included in the user interface 2500 is received, the induction heating device 2000 may attempt to be communicatively connected to the sensor device 1000 in order to operate in an AI cook mode. The AI cook mode may refer to a mode for performing automatic cooking by controlling a power level according to the temperature of the food in the cooking vessel 10 (e.g., an automatic cooking mode), or a mode for providing cooking guide information to the user according to the temperature of the food in the cooking vessel 10 (e.g., a cooking guide mode). Therefore, according to an embodiment of the disclosure, the sensor device 1000 may assist the induction heating device 2000 to operate in the AI cook mode (e.g., the automatic cooking mode or the cooking guide mode).

When the sensor device 1000 and the induction heating device 2000 are not paired with each other, the induction heating device 2000 may output a notification instructing to press the pairing button 1001 of the sensor device 1000 (hereinafter also referred to as a cook sensor), through a display included in the user interface 2500. For example, referring to a first screen 110, the induction heating device 2000 may display, on the display, a notification such as 'Press the round button on the cook sensor'. The induction heating device 2000 may output voice such as 'Press the round button on the cook sensor'. The induction heating device 2000 may operate in a scan mode for detecting a neighboring device.

When the user presses the pairing button 1001 of the sensor device 1000, the sensor device 1000 may operate in a sensing mode to allow the induction heating device 2000 to detect the sensor device 1000. Alternatively, the sensor device 1000 may broadcast a BLE advertising packet.

The induction heating device 2000 may detect the sensor device 1000 by scanning an ambient environment. Alternatively, the induction heating device 2000 may detect the sensor device 1000 by receiving the BLE advertising packet broadcast by the sensor device 1000. According to an embodiment of the disclosure, when the sensor device 1000 is detected, the induction heating device 2000 may display an icon of the sensor device 1000 on the display. In this case, when the user selects the icon of the sensor device 1000, the induction heating device 2000 may perform a pairing procedure with the sensor device 1000, and establish a short-range wireless communication channel (e.g., a Bluetooth communication channel or a BLE communication channel) with the sensor device 1000. Referring to a second screen 120, the induction heating device 2000 may display a notification such as 'Connecting' on the display while the pairing procedure is being performed and, referring to a third screen 130, the induction heating device 2000 may display a notification such as 'Connected' on the display when the short-range wireless communication channel with the sensor device 1000 is established.

According to an embodiment of the disclosure, when the sensor device 1000 is communicatively connected to the induction heating device 2000, the sensor device 1000 may assist the induction heating device 2000 to provide the AI cook mode, by transmitting at least one of the food temperature data, the internal temperature data, or the information about the level of charge of the capacitor (or battery) to the induction heating device 2000 in a certain cycle. The sensor device 1000 for stably assisting the induction heating device 2000 to provide the AI cook mode will now be described in detail.

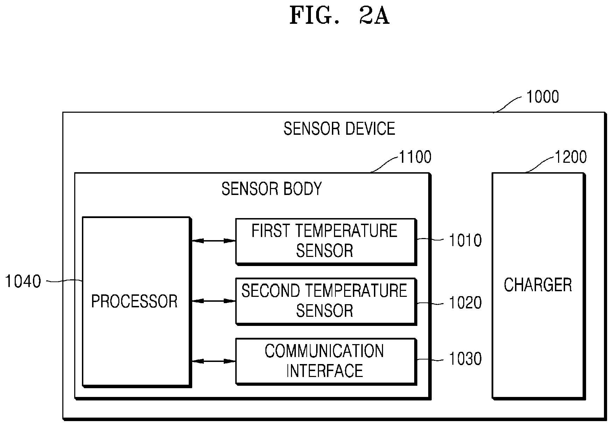

FIG. 2A is a block diagram for describing functions of the sensor device 1000 according to an embodiment of the disclosure.

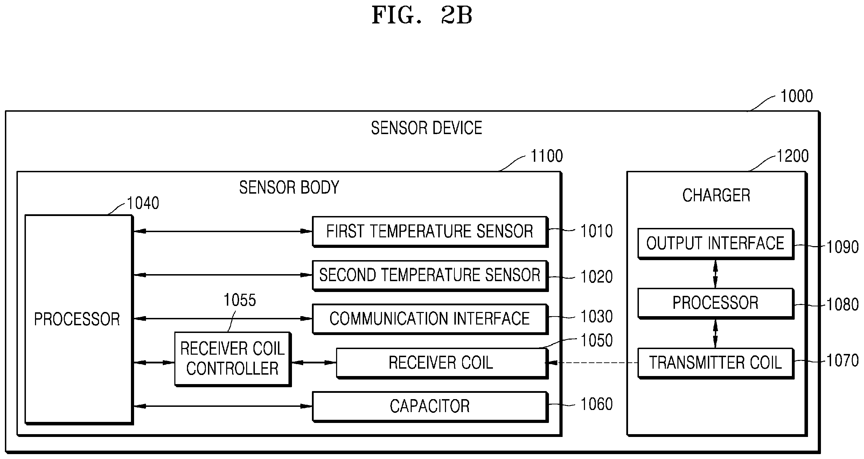

FIG. 2B is a block diagram for describing functions of the sensor device 1000 according to an embodiment of the disclosure.

As illustrated in FIG. 2A, the sensor device 1000 according to an embodiment of the disclosure may include a sensor body 1100 and a charger 1200, and the sensor body 1100 may include a first temperature sensor 1010, a second temperature sensor 1020, a communication interface 1030, and a processor 1040. However, not all of the illustrated elements are essential. The sensor device 1000 may be implemented with more elements than the illustrated elements or may be implemented with fewer elements than the illustrated elements. As illustrated in FIG. 2B, in addition to the first temperature sensor 1010, the second temperature sensor 1020, the communication interface 1030, and the processor 1040, the sensor body 1100 of the sensor device 1000 according to an embodiment of the disclosure may further include a receiver coil 1050, a receiver coil controller 1055, and a capacitor 1060. The charger 1200 may include a transmitter coil 1070, a processor 1080, and an output interface 1090.

The above-mentioned elements will now be described one by one.

The first temperature sensor 1010 is a sensor for measuring a temperature of food while in contact with the food in the cooking vessel 10 placed on a top plate of the induction heating device 2000. For example, the first temperature sensor 1010 may measure a temperature of a liquid (e.g., water or soup) in the cooking vessel 10 when the first temperature sensor 1010 is in contact with the liquid, or measure a temperature of a solid (e.g., meat or fish) when the first temperature sensor 1010 is inserted into the solid.

According to an embodiment of the disclosure, the first temperature sensor 1010 may include a thermistor whose electrical resistance changes with temperature. For example, the first temperature sensor 1010 may be a negative temperature coefficient (NTC) temperature sensor or a positive temperature coefficient (PTC) temperature sensor.

According to an embodiment of the disclosure, the first temperature sensor 1010 may be positioned at the tip of a probe of the sensor body 1100, which is inserted into the food. The probe may be made of a stainless material, but is not limited thereto. The probe may also be inserted into liquids, and thus have a waterproof function.

The second temperature sensor 1020 is a sensor for measuring an internal temperature of the sensor device 1000. According to an embodiment of the disclosure, the second temperature sensor 1020 may be provided in the vicinity of a component which is the most vulnerable to temperature from among internal components. For example, because the capacitor 1060 may experience a reduction in lifetime or explosion when exposed to high temperature, the second temperature sensor 1020 may be positioned within a preset distance from the capacitor 1060.

According to an embodiment of the disclosure, the second temperature sensor 1020 may include a thermistor whose electrical resistance changes with temperature. For example, the second temperature sensor 1020 may be an NTC temperature sensor, but is not limited thereto. The second temperature sensor 1020 may be a PTC temperature sensor.

According to an embodiment of the disclosure, the internal temperature data measured by the second temperature sensor 1020 may be compared to preset reference temperature data, and be used by the induction heating device 2000 to provide a notification to a user when the internal temperature data is higher than or equal to the reference temperature data. In addition, or in the alternative, the internal temperature data measured by the second temperature sensor 1020 may be compared to a preset reference temperature data, and be used to control a power level of the induction heating device 2000 when the internal temperature data is higher than or equal to the reference temperature data. For example, if the internal temperature data is higher than or equal to the reference temperature data: a) a notification is provided to a user and the power level of the induction heating device is not controlled, or b) a notification is not provided to a user and the power level of the induction heating device is controlled, or c) a notification is provided to a user and the power level of the induction heating device is controlled.

The communication interface 1030 may include one or more elements for enabling communication between the sensor device 1000 and the induction heating device 2000. For example, the communication interface 1030 may include a short-range wireless communication interface or a mobile communication interface. The short-range wireless communication interface may include a Bluetooth communication interface, a BLE communication interface, an NFC interface, a WLAN (or Wi-Fi) communication interface, a Zigbee communication interface, an IrDA communication interface, a WFD communication interface, a UWB communication interface, or an Ant+ communication interface, but is not limited thereto.

According to an embodiment of the disclosure, the communication interface 1030 may transmit, to the induction heating device 2000, the food temperature data measured by the first temperature sensor 1010 and the internal temperature data measured by the second temperature sensor 1020. In this case, the communication interface 1030 may transmit the food temperature data and the internal temperature data in a preset cycle. For example, the communication interface 1030 may transmit the food temperature data and the internal temperature data to the induction heating device 2000 in a cycle of 1 second.

According to an embodiment of the disclosure, when a level of charge of the capacitor 1060 is lower than or equal to a threshold value, the data transmission cycle may be adjusted. For example, when the level of charge of the capacitor 1060 is lower than or equal to 20%, the data transmission cycle may be changed from 1 second to 5 seconds. In addition, according to an embodiment of the disclosure, when an operating time of the sensor device 1000 is increased, the data transmission cycle may be adjusted. For example, the food temperature data and the internal temperature data may be transmitted in a cycle of 1 second when the operating time of the sensor device 1000 is less than or equal to 1 hour, and be transmitted in a cycle of 5 seconds when the operating time of the sensor device 1000 is greater than 1 hour.

The processor 1040 of the sensor body 1100 controls overall operations of the sensor device 1000. For example, the processor 1040 may control the first temperature sensor 1010, the second temperature sensor 1020, the communication interface 1030, the receiver coil 1050, the receiver coil controller 1055, and the capacitor 1060.

According to an embodiment of the disclosure, the processor 1040 of the sensor body 1100 may identify a level of charge of the capacitor 1060, and transmit data indicating the level of charge of the capacitor 1060 (also referred to herein as "information about the level of charge of the capacitor 1060") to the induction heating device 2000 through the communication interface 1030. The information about the level of charge of the capacitor 1060 may include at least one of data about a current level of charge of the capacitor 1060, data about a remaining operating time of the capacitor 1060, or data about whether the capacitor 1060 needs to be charged, but is not limited thereto.

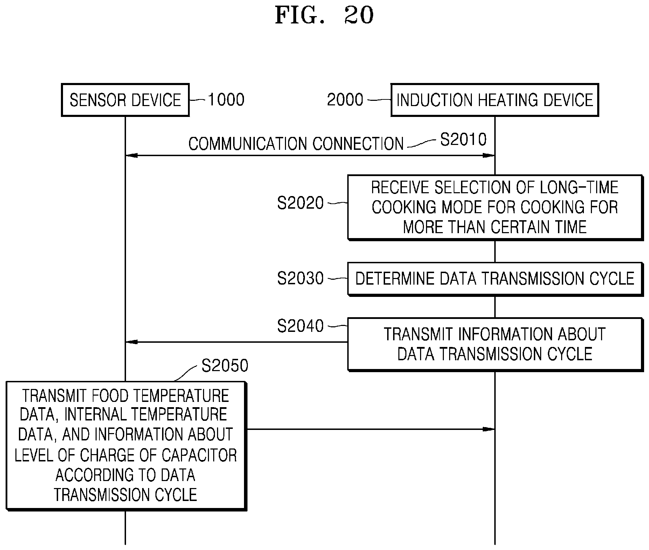

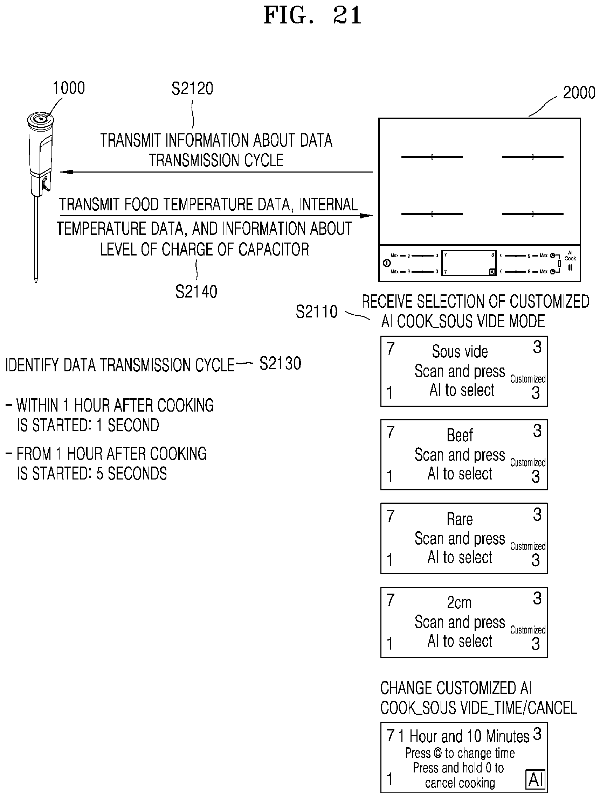

According to an embodiment of the disclosure, the processor 1040 of the sensor body 1100 may receive information about a data transmission cycle from the induction heating device 2000 through the communication interface 1030. For example, the processor 1040 may receive, from the induction heating device 2000 through the communication interface 1030, the information about the data transmission cycle determined based on a cooking mode selected on the induction heating device 2000 or a cooking time estimated by the induction heating device 2000. The processor 1040 may control the communication interface 1030 to transmit the food temperature data and the internal temperature data to the induction heating device 2000 according to the data transmission cycle. The operation, performed by the sensor device 1000, of controlling the communication interface 1030 according to the data transmission cycle determined by the induction heating device 2000 will be described in detail below with reference to FIGS. 20 and 21.

Meanwhile, according to an embodiment of the disclosure, the processor 1040 of the sensor body 1100 may switch an operation mode of the communication interface 1030 from an active mode to a sleep mode when a communication connection termination signal is received from the induction heating device 2000. The communication connection termination signal may include a signal for turning off the induction heating device 2000, a signal for releasing the communication connection, or a signal indicting that the cooking mode is terminated, but is not limited thereto. In addition, the processor 1040 may switch the operation mode of the communication interface 1030 from the sleep mode to the active mode when a communication connection request signal is received from the induction heating device 2000.

The receiver coil 1050 of the sensor body 1100 may wirelessly receive energy from the transmitter coil 1070 of the charger 1200 by using wireless power transmission technology. The wireless power transmission technology is a technology for wirelessly transmitting energy to a load without wires by converting electric energy into electromagnetic waves. According to an embodiment of the disclosure, the wireless power transmission technology may include magnetic induction technology. The magnetic induction technology is a technology by which most of a magnetic field generated due to a current flowing through a primary coil passes through a secondary coil and thus an induced current flows through the secondary coil to supply energy to a load. For example, most of a magnetic field generated due to a current flowing through the transmitter coil 1070 of the charger 1200 may pass through the receiver coil 1050 of the sensor body 1100 and thus an induced current may flow through the receiver coil 1050 to supply energy to the capacitor 1060. According to an embodiment of the disclosure, a natural resonant frequency of each coil may differ from a transmission frequency for transmitting energy.

The receiver coil 1050 may be wound in various shapes according to a shape of the sensor body 1100. For example, the receiver coil 1050 may be wound in a 2-dimensional shape such as a circular or oval shape, or in a 3-dimensional shape such as a cylindrical shape (e.g., a solenoid shape), but is not limited thereto. The receiver coil 1050 may be wound in a rectangular shape having round corners, or in a planar shape which is not definable as a certain shape.

The receiver coil controller 1055 of the sensor body 1100 may be connected to the receiver coil 1050 to control operation of the receiver coil 1050. For example, the receiver coil controller 1055 may control driving of the receiver coil 1050 according to a driving command received from the processor 1040.

The capacitor 1060 of the sensor body 1100 may be charged by storing wirelessly received energy. Herein, the capacitor may also be called a battery. According to an embodiment of the disclosure, to store the wirelessly received energy, a secondary battery (e.g., a lithium ion battery, a nickel cadmium battery, a polymer battery, or a nickel hydrogen battery) may be used instead of the capacitor 1060. Meanwhile, according to an embodiment of the disclosure, the capacitor 1060 may include a supercapacitor, but is not limited thereto. However, the capacitor 1060 will be representatively described as a supercapacitor below.

A supercapacitor refers to a capacitor having a very high capacity and is also called an ultra-capacitor or an ultrahigh-capacity capacitor. The supercapacitor may include an electric double layer capacitor (EDLC). Unlike general secondary batteries using chemical reaction, the supercapacitor is charged using simple movement of ions to an electrode-electrolyte interface or surface chemical reaction. The supercapacitor is characterized by rapid charge and discharge, high efficiency, and semi-permanent use.

According to an embodiment of the disclosure, the supercapacitor may include a hybrid supercapacitor. The hybrid supercapacitor is an energy source in which chemical properties of a secondary battery are integrated with physical properties of a supercapacitor in a single structure. The hybrid supercapacitor is an asymmetric device including lithium-doped graphite (e.g., a positive electrode) and activated carbon (e.g., a negative electrode). For example, the hybrid supercapacitor is a hybrid energy storage device which uses a negative electrode material for storing energy through oxidation/reduction like a lithium ion secondary battery, and a positive electrode material for collecting charges in an electric double layer like a capacitor (e.g., an EDLC). Although movement of charges is mostly carried out in an electrochemical manner, the depth of the movement of charges is much lower compared to a lithium ion battery. In addition, the hybrid supercapacitor has a low risk of fire or thermal runaway because metal oxide is not used, and output characteristics relative to a level of charge thereof satisfy requirements for a low-voltage and low-power system.

Meanwhile, a lifetime of the supercapacitor is correlated with a temperature and an allowable current. For example, it is assumed that a first capacitor with an allowable operating temperature of 85°C and a capacity of 10 uF has a lifetime of 1,000 hours. In this case, the first capacitor may be used for 1,000 hours at 85°C, for 2,000 hours at 75°C, and for 4,000 hours at 65°C. That is, the lifetime of the first capacitor may be doubled whenever an ambient temperature of the first capacitor is reduced by 10 °C, and be halved whenever the ambient temperature of the first capacitor is increased by 10 °C. Therefore, to maximize an operating lifetime of the supercapacitor which is a type of capacitor, an ambient temperature of the supercapacitor needs to be controlled not to expose the supercapacitor to a high temperature higher than or equal to a reference temperature.

The charger 1200 is an assembly for charging energy in the capacitor 1060 of the sensor body 1100 in a wireless power transmission manner. Energy may be charged in the capacitor 1060 of the sensor body 1100 when the sensor body 1100 is connected to the charger 1200 or is close to the charger 1200 within a preset distance, and the energy charged in the capacitor 1060 of the sensor body 1100 may be used when the sensor body 1100 is disconnected from the charger 1200 or is far away from the charger 1200 beyond the preset distance. The charger 1200 may include a port for receiving power supplied from an external power source. For example, the charger 1200 may include a universal serial bus (USB) Type-C port, but is not limited thereto. For example, the charger 1200 may include a USB Type-B port.

The transmitter coil 1070 of the charger 1200 may generate a magnetic field to wirelessly transmit energy to the receiver coil 1050. The transmitter coil 1070 may be wound in various shapes according to a shape of the charger 1200. For example, the transmitter coil 1070 may be wound in a 2-dimensional shape such as a circular or oval shape, or in a 3-dimensional shape such as a cylindrical shape (e.g., a solenoid shape), but is not limited thereto. The transmitter coil 1070 may be wound in a rectangular shape having round corners, or in a planar shape which is not definable as a certain shape.

Meanwhile, according to an embodiment of the disclosure, the shape of the transmitter coil 1070 may correspond to the shape of the receiver coil 1050. For example, when the receiver coil 1050 is wound in an oval shape, the transmitter coil 1070 may also be wound in an oval shape, and, when the receiver coil 1050 is wound in a cylindrical shape, the transmitter coil 1070 may also be wound in a cylindrical shape.

According to an embodiment of the disclosure, the charger 1200 may receive the information about the level of charge of the capacitor 1060 from the sensor body 1100 by using power frequency communication between the transmitter coil 1070 and the receiver coil 1050. For example, when the sensor body 1100 is connected to the charger 1200 or is close to the charger 1200 within a preset distance, the sensor body 1100 may transmit the information about the level of charge of the capacitor 1060 to the charger 1200 by using power frequency communication (e.g., a power frequency band of 100 kHz to 205 kHz).

The processor 1080 of the charger 1200 may control overall operations of the charger 1200. For example, the processor 1080 of the charger 1200 may control a transmitter coil driver circuit to supply a current to the transmitter coil 1070, based on power supplied from the external power source. In addition, the processor 1080 of the charger 1200 may control the output interface 1090 to represent the level of charge of the capacitor 1060, based on the information about the level of charge of the capacitor 1060 received from the sensor body 1100. The processor 1080 of the charger 1200 may be mounted on a printed circuit board (PCB).

The output interface 1090 of the charger 1200 may include a plurality of light-emitting diodes (LEDs). For example, the output interface 1090 of the charger 1200 may include a red LED and a green LED.

When the capacitor 1060 is charged, the output interface 1090 of the charger 1200 may output a first color when the level of charge of the capacitor 1060 is lower than or equal to a first threshold value, output a second color when the level of charge of the capacitor 1060 is between the first threshold value and a second threshold value, or output a third color when the level of charge of the capacitor 1060 is higher than or equal to the second threshold value. For example, the output interface 1090 of the charger 1200 may output a red color by using the red LED when the level of charge of the capacitor 1060 is 0% to 8%, output an orange color by using the red and green LEDs at the same time when the level of charge of the capacitor 1060 is 9% to 99%, or output a green color by using the green LED when the capacitor 1060 is fully charged. Meanwhile, after a certain time (e.g., 1 hour) from when the capacitor 1060 is fully charged, the output interface 1090 of the charger 1200 may stop outputting the green color by using the green LED. Meanwhile, when a problem occurs with a charging function, the output interface 1090 of the charger 1200 may make the red color blink in a certain cycle by using the red LED.

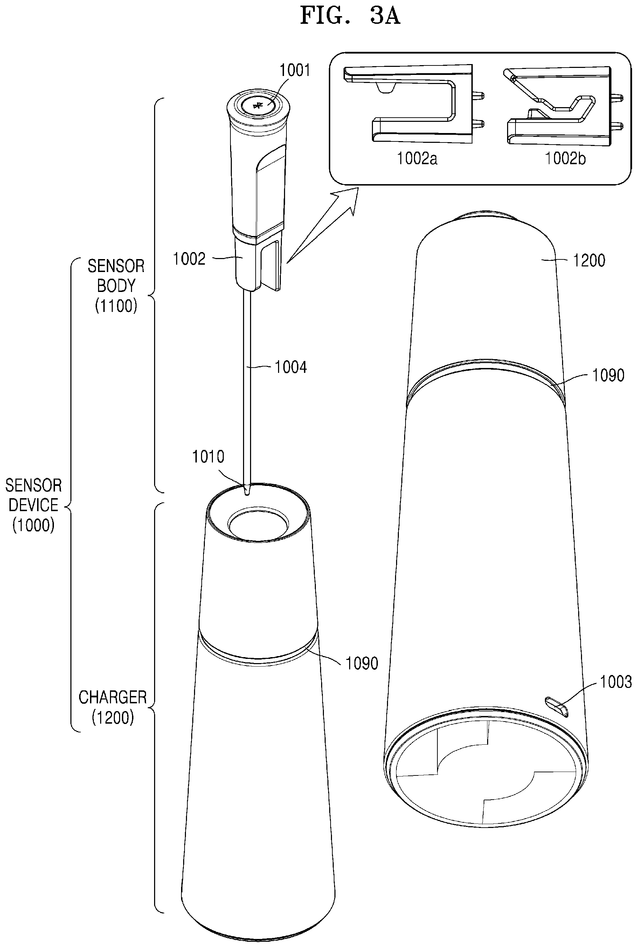

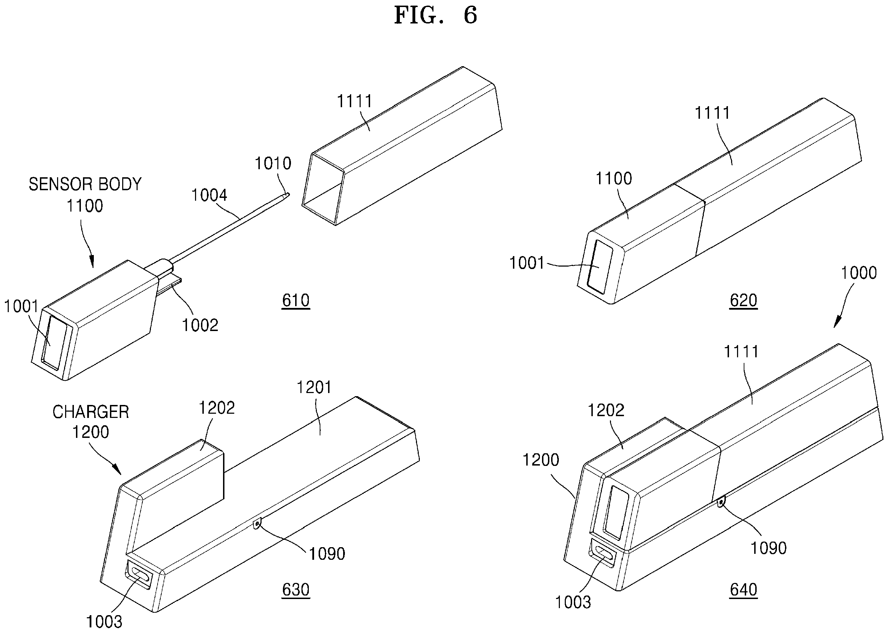

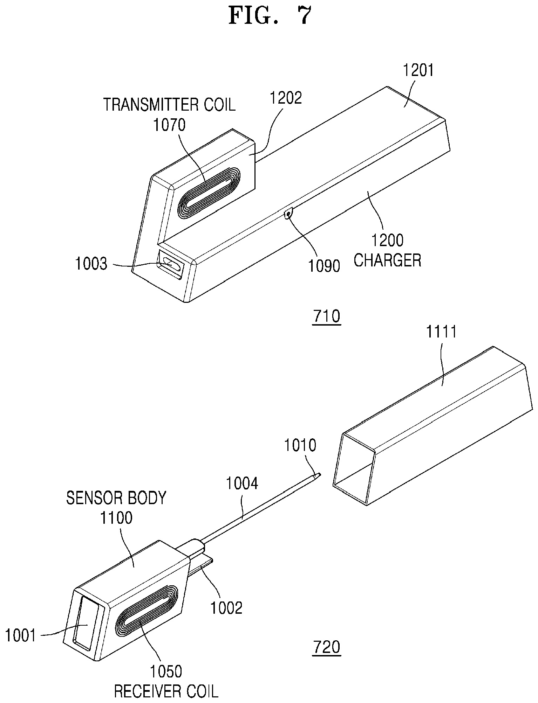

Meanwhile, according to an embodiment of the disclosure, the sensor body 1100 may be of a first type configured to be insertable into an internal cavity of the charger 1200. Alternatively, the sensor body 1100 may be of a second type configured to be mounted on an outer surface (i.e., a mounting surface) of the charger 1200. However, the sensor body 1100 is not limited to the two types. The first type will now be described with reference to FIGS. 3A to 5, and then the second type will be described below with reference to FIGS. 6 and 7.

FIG. 3A is a diagram for describing an external structure of the sensor device 1000 according to an embodiment of the disclosure.

The sensor device 1000 may include the sensor body 1100 and the charger 1200. Referring to FIG. 3A, the charger 1200 may be a cylindrical structure including an internal cavity, and the sensor body 1100 may be configured to be insertable into the internal cavity of the charger 1200. In this case, the internal cavity of the charger 1200 may have a depth sufficient to receive a probe 1004 including the first temperature sensor 1010 of the sensor body 1100.

The pairing button 1001 may be positioned on the top of the sensor body 1100. The pairing button 1001 may have various shapes, but will be representatively described as having a round shape in relation to FIG. 3A. When a user presses the pairing button 1001, the sensor device 1000 may operate in a sensing mode to allow the induction heating device 2000 to detect the sensor device 1000.

The sensor body 1100 may further include a cooking vessel holder 1002. The cooking vessel holder 1002 is an element for assisting the sensor body 1100 to be stably mounted on the cooking vessel 10. According to an embodiment of the disclosure, the cooking vessel holder 1002 may include a hook inside to fix the sensor body 1100 to the cooking vessel 10. For example, the cooking vessel holder 1002 may be configured to include a hook on an inner surface thereof (see reference numeral 1002a), or configured to include hooks on both inner surfaces thereof (see reference numeral 1002b). The cooking vessel holder 1002 may be made of a silicone material to block heat transferred from the cooking vessel 10, but is not limited thereto. When the sensor body 1100 is mounted on the cooking vessel 10 by using the cooking vessel holder 1002, the probe 1004 including the first temperature sensor 1010 may be inserted into the cooking vessel 10. In this case, the first temperature sensor 1010 may measure a temperature of a content of the cooking vessel 10 while in contact with the content.

The charger 1200 may include, at a lower portion of an outer surface thereof, a port for receiving power supplied from an external power source. The port of the charger 1200 may be a USB Type-C port or a USB Type-B port, but is not limited thereto.

The output interface 1090 representing a level of charge of the capacitor 1060 may be provided at a middle portion of the charger 1200. For example, the output interface 1090 of the charger 1200 may include a red LED and a green LED, and output three colors (e.g., red, orange, and green) by using the red and green LEDs.

According to an embodiment of the disclosure, the output interface 1090 of the charger 1200 may include a transparent cover for a smoke effect. For example, the charger 1200 may emit soft LED light by using a smoked transparent cover.

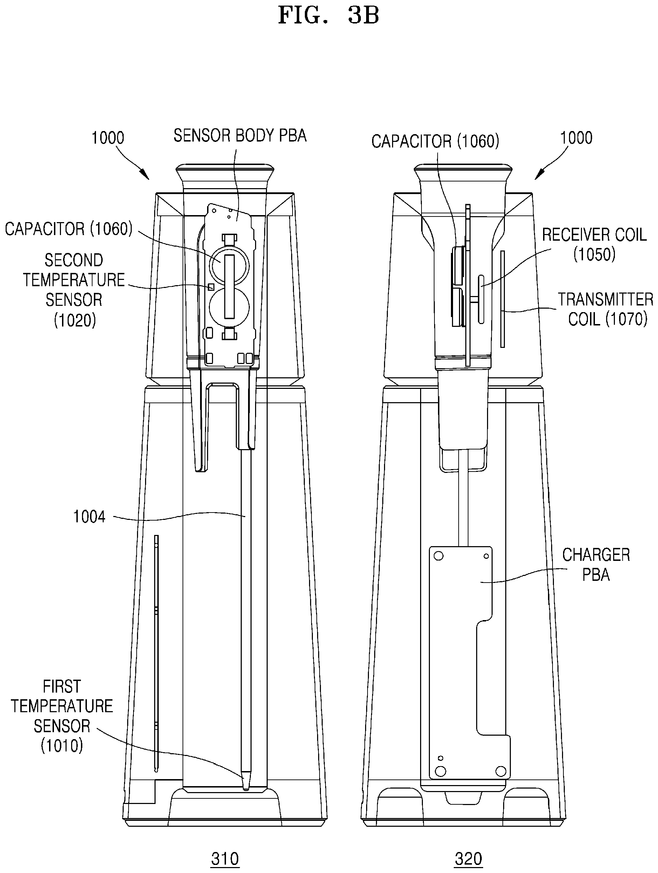

FIG. 3B is a diagram for describing an internal structure of the sensor device 1000 according to an embodiment of the disclosure. A state in which the sensor body 1100 is inserted into the internal cavity of the charger 1200 will be representatively described in relation to FIG. 3B.

Referring to reference numeral 310 of FIG. 3B, the first temperature sensor 1010 may be positioned at the tip of the probe 1004 of the sensor body 1100, which is inserted into food. The probe 1004 may be made of a stainless material, or made of a waterproof stainless material so as to be insertable into liquids.

The capacitor 1060 and the second temperature sensor 1020 may be mounted on a PCB of the sensor body 1100. The circuit-mounted PCB may also be called a printed board assembly (PBA) or a printed circuit board assembly (PCBA). The second temperature sensor 1020 is a sensor for measuring an internal temperature of the sensor body 1100, and may be provided in the vicinity of a component which is the most vulnerable to temperature from among internal components of the sensor body 1100. For example, because the capacitor 1060 may experience a reduction in lifetime or explosion when exposed to high temperature, the second temperature sensor 1020 may be mounted in the vicinity of the capacitor 1060.

Referring to reference numeral 320 of FIG. 3B, because the sensor body 1100 is inserted into the internal cavity of the charger 1200, the receiver coil 1050 may wirelessly receive energy from the transmitter coil 1070. For example, when the receiver coil 1050 and the transmitter coil 1070 are adjacent to each other, induced electromotive force may be generated and energy generated by the induced electromotive force may be stored in the capacitor 1060 (e.g., a supercapacitor).

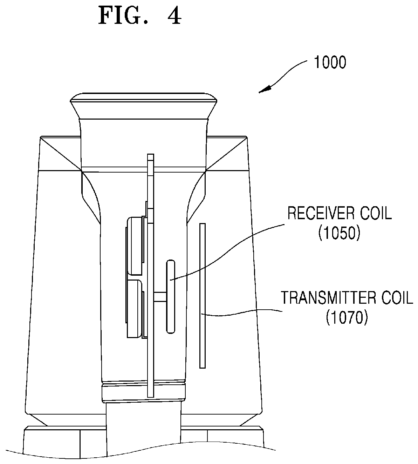

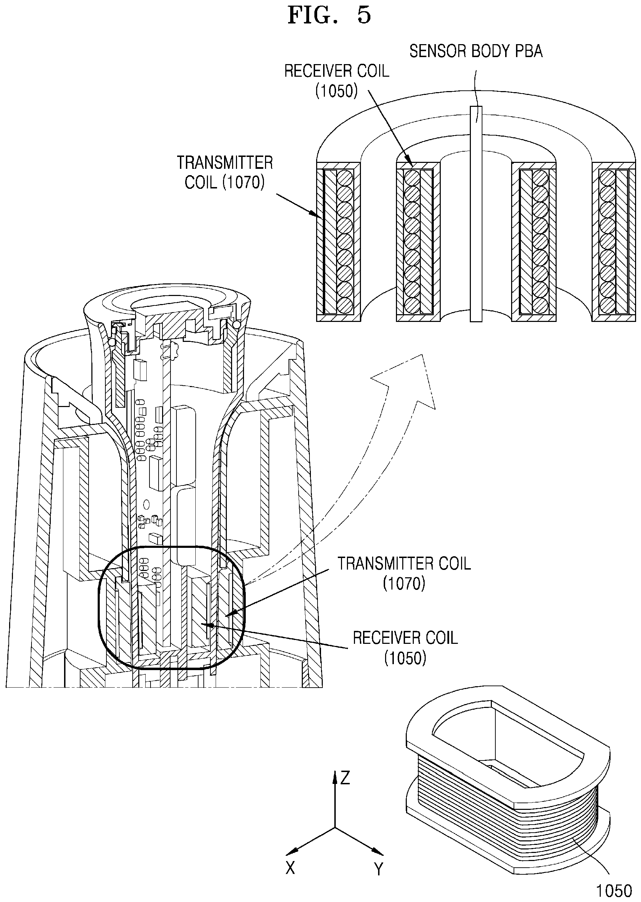

According to an embodiment of the disclosure, the receiver coil 1050 and the transmitter coil 1070 may be wound in a circular shape or in a cylindrical shape. The shape of the receiver coil 1050 and the transmitter coil 1070 will now be described in detail with reference to FIGS. 4 and 5.

FIG. 4 is a diagram for describing a structure for wirelessly charging the sensor device 1000 in a specific direction, according to an embodiment of the disclosure.

Referring to FIG. 4, the transmitter coil 1070 may be wound in a circular shape in a certain surface of the charger 1200 (e.g., a first surface). The receiver coil 1050 may be wound in a circular shape in a certain surface of the sensor body 1100 (e.g., a second surface). At this time, in order to be wirelessly charged, the sensor body 1100 needs to be inserted into the charger 1200 in such a manner that the second surface in which the receiver coil 1050 is wound corresponds to the first surface in which the transmitter coil 1070 is wound.

The receiver coil 1050 and the transmitter coil 1070 are wound in a circular shape in FIG. 4, but are not limited thereto. The receiver coil 1050 and the transmitter coil 1070 may be wound in various shapes.

FIG. 5 is a diagram for describing a structure for wirelessly charging the sensor device 1000 in a non-specific direction, according to an embodiment of the disclosure.

Referring to FIG. 5, the transmitter coil 1070 included in the charger 1200 may be wound along a first axis direction of the charger 1200 (e.g., a Z-axis direction), and the receiver coil 1050 included in the sensor body 1100 may also be wound along the first axis direction (e.g., the Z-axis direction) in the sensor body 1100. For example, each of the transmitter coil 1070 and the receiver coil 1050 may be wound in a cylindrical shape (e.g., a solenoid shape) along the first axis direction. In this case, because the sensor body 1100 is inserted into the internal cavity of the charger 1200, the transmitter coil 1070 may be positioned outside the receiver coil 1050. A winding radius of the transmitter coil 1070 may be greater than the winding radius of the receiver coil 1050.

As illustrated in FIG. 5, when each of the transmitter coil 1070 and the receiver coil 1050 is wound along the first axis direction in a cylindrical shape (e.g., a solenoid shape), the sensor body 1100 may be wirelessly charged in any direction when inserted into the internal cavity of the charger 1200. Therefore, a user does not need to pay attention to a direction in which the sensor body 1100 is inserted into the charger 1200 to charge the capacitor 1060, and thus user convenience may be enhanced.

FIG. 6 is a diagram for describing an external structure of the sensor device 1000 according to another embodiment of the disclosure.

Referring to FIG. 6, the charger 1200 does not have an internal cavity, and the sensor body 1100 may be implemented to be mounted on an outer surface (i.e., a mounting surface) of the charger 1200. In this case, referring to reference numeral 610 of FIG. 6, the sensor device 1000 may further include a cover 1111 for protecting the probe 1004 included in the sensor body 1100. Referring to reference numeral 620 of FIG. 6, the sensor body 1100 may be combined with the cover 1111. When the sensor body 1100 is combined with the cover 1111, the cooking vessel holder 1002 and the probe 1004 including the first temperature sensor 1010 may be inserted into the cover 1111.

Meanwhile, referring to reference numerals 610 and 620 of FIG. 6, the sensor body 1100 may include the pairing button 1001, and the pairing button 1001 may be implemented in a rectangular shape. When a user presses the pairing button 1001, the sensor device 1000 may operate in a sensing mode to allow the induction heating device 2000 to detect the sensor device 1000.

Referring to reference numeral 630 of FIG. 6, the charger 1200 may include a mounting surface 1201 on which the sensor body 1100 is mounted, and a charging surface 1202 in which the transmitter coil 1070 is embedded. The charger 1200 may include, at a side thereof, a port 1003 for receiving power supplied from an external power source. The port 1003 of the charger 1200 may be a USB Type-C port or a USB Type-B port, but is not limited thereto.

The output interface 1090 representing a level of charge of the capacitor 1060 may be provided at a middle portion of the charger 1200. For example, the output interface 1090 of the charger 1200 may include a red LED and a green LED, and output three colors (e.g., red, orange, and green) by using the red and green LEDs. The output interface 1090 may be positioned under the mounting surface 1201 where the sensor body 1100 is mounted, so as not to be covered by the sensor body 1100.

Referring to reference numeral 640 of FIG. 6, when the sensor body 1100 is mounted on the mounting surface 1201 of the charger 1200, the receiver coil 1050 of the sensor body 1100 may wirelessly receive power from the transmitter coil 1070 of the charger 1200. That is, when the sensor body 1100 is mounted on the mounting surface 1201 of the charger 1200, because the receiver coil 1050 is close to the transmitter coil 1070, a magnetic field generated by the transmitter coil 1070 may pass through the receiver coil 1050 and thus an induced current may flow through the receiver coil 1050 to charge energy in the capacitor 1060 (e.g., a supercapacitor).

According to an embodiment of the disclosure, the receiver coil 1050 and the transmitter coil 1070 may be wound in a circular shape, an oval shape, or other various shapes. A case in which the receiver coil 1050 and the transmitter coil 1070 are wound in an oval shape will now be described in detail with reference to FIG. 7.

FIG. 7 is a diagram for describing a structure of the sensor device 1000 including an oval-shaped transmitter coil 1070 and an oval-shaped receiver coil 1050, according to an embodiment of the disclosure.

Referring to reference numeral 710 of FIG. 7, the transmitter coil 1070 of the charger 1200 may be wound in an oval shape in the charging surface 1202. Referring to reference numeral 720 of FIG. 7, the receiver coil 1050 may be wound in an oval shape in the sensor body 1100. In this case, the receiver coil 1050 may be wound at a position such that the receiver coil 1050 is aligned with the transmitter coil 1070 when the sensor body 1100 is in contact with the charging surface 1202 when mounted on the mounting surface 1201 of the charger 1200. As used herein, the term "aligned" should be understood to indicate that the receiver coil 1050 and the transmitter coil 1070 are positioned relative to one another so as to be able to communicate with one another using power frequency communication.

When the transmitter coil 1070 and the receiver coil 1050 are wound in an oval shape, compared to a circular shape, an area occupied by the transmitter coil 1070 and the receiver coil 1050 may be minimized.

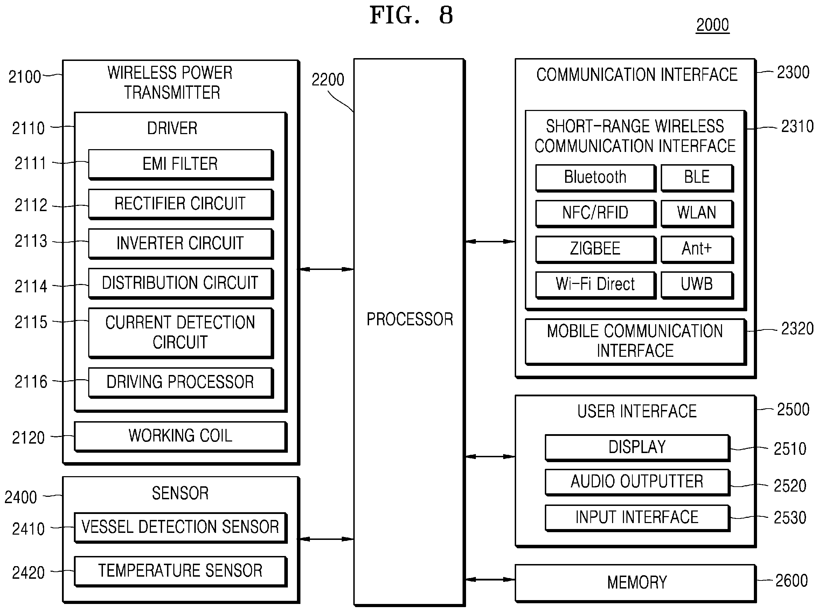

FIG. 8 is a block diagram for describing functions of the induction heating device 2000 according to an embodiment of the disclosure.

As illustrated in FIG. 8, the induction heating device 2000 according to an embodiment of the disclosure may include a wireless power transmitter 2100, a processor 2200, a communication interface 2300, a sensor 2400, a user interface 2500, and a memory 2600. However, not all of the illustrated elements are essential. The induction heating device 2000 may be implemented with more elements than the illustrated elements or may be implemented with fewer elements than the illustrated elements.

The above-mentioned elements will now be described one by one.

The wireless power transmitter 2100 may include a driver 2110 and a working coil 2120, but is not limited thereto. The driver 2110 may receive power supplied from an external power source, and supply a current to the working coil 2120 according to a driving control signal of the processor 2200. The driver 2110 may include an electromagnetic interference (EMI) filter 2111, a rectifier circuit 2112, an inverter circuit 2113, a distribution circuit 2114, a current detection circuit 2115, and a driving processor 2116, but is not limited thereto.

The EMI filter 2111 may block high-frequency noise included in alternating current (AC) power supplied from an external power source, and pass an AC voltage and an AC current of a preset frequency (e.g., 50 Hz or 60 Hz). A fuse and a relay for blocking overcurrent may be provided between the EMI filter 2111 and the external power source. The AC power, the high-frequency noise of which is blocked by the EMI filter 2111, is supplied to the rectifier circuit 2112.

The rectifier circuit 2112 may convert the AC power into direct current (DC) power. For example, the rectifier circuit 2112 may convert the AC voltage whose magnitude and polarity (e.g., a positive voltage or a negative voltage) change with time into a DC voltage whose magnitude and polarity are constant, and convert the AC current whose magnitude and direction (e.g., a positive current or a negative current) change with time into a DC current whose magnitude is constant. The rectifier circuit 2112 may include a bridge diode. For example, the rectifier circuit 2112 may include four diodes. The bridge diode may convert the AC voltage whose polarity changes with time into a positive voltage whose polarity is constant, and convert the AC current whose direction changes with time into a positive current whose direction is constant. The rectifier circuit 2112 may include a DC link capacitor. The DC link capacitor may convert the positive voltage whose magnitude changes with time into a DC voltage whose magnitude is constant.

The inverter circuit 2113 may include a switching circuit for supplying or blocking a driving current to the working coil 2120, and a resonance circuit resonating together with the working coil 2120. The switching circuit may include a first switch and a second switch. The first and second switches may be connected in series between a plus line and a minus line output from the rectifier circuit 2112. The first and second switches may be turned on or off according to a driving control signal of the driving processor 2116.

The inverter circuit 2113 may control a current supplied to the working coil 2120. For example, the magnitude and direction of the current flowing through the working coil 2120 may vary depending on whether the first and second switches included in the inverter circuit 2113 are turned on or off. In this case, an AC current may be supplied to the working coil 2120. An AC current with a sinusoidal waveform is supplied to the working coil 2120 according to a switching operation of the first and second switches. When a switching cycle of the first and second switches is long (e.g., when a switching frequency of the first and second switches is small), the magnitude of the current supplied to the working coil 2120 may be increased and the strength of a magnetic field output by the working coil 2120 (e.g., an output of the induction heating device 2000) may also be increased.

When the induction heating device 2000 includes a plurality of working coils 2120, the driver 2110 may include the distribution circuit 2114. The distribution circuit 2114 may include a plurality of switches for passing or blocking a current supplied to the plurality of working coils 2120, and the plurality of switches may be turned on or off according to a distribution control signal of the driving processor 2116.

The current detection circuit 2115 may include a current sensor for measuring the current output from the inverter circuit 2113. The current sensor may transmit, to the driving processor 2116, an electrical signal corresponding to the measured current value.

The driving processor 2116 may determine a switching frequency (e.g., a turn on/off frequency) of the switching circuit included in the inverter circuit 2113, based on a power level of the induction heating device 2000. The driving processor 2116 may generate a driving control signal for turning on or off the switching circuit, based on the determined switching frequency.

The working coil 2120 may generate a magnetic field for heating the cooking vessel 10. For example, when a driving current is supplied to the working coil 2120, a magnetic field may be induced in the vicinity of the working coil 2120. When a current whose magnitude and direction change with time, i.e., an AC current, is supplied to the working coil 2120, a magnetic field whose magnitude and direction change with time may be induced in the vicinity of the working coil 2120. The magnetic field in the vicinity of the working coil 2120 may pass through a top plate made of tempered glass, and reach the cooking vessel 10 placed on the top plate. An eddy current rotating around the magnetic field may be generated in the cooking vessel 10 due to the magnetic field whose magnitude and direction change with time, and electric resistance heat may be generated in the cooking vessel 10 due to the eddy current. The electric resistance heat refers to heat generated in a resistor when a current flows through the resistor, and is also called Joule heat. The cooking vessel 10 may be heated by the electric resistance heat, and thus a content of the cooking vessel 10 may be heated.

The processor 2200 controls overall operations of the induction heating device 2000. The processor 2200 may execute programs stored in the memory 2600 to control the wireless power transmitter 2100, the communication interface 2300, the sensor 2400, the user interface 2500, and the memory 2600.

According to an embodiment of the disclosure, the induction heating device 2000 may include an AI processor. The AI processor may be produced in the form of a dedicated hardware chip for AI or as a part of a general-purpose processor (e.g., a central processing unit (CPU) or an application processor) or a dedicated graphics processor (e.g., a graphics processing unit (GPU)), and be mounted in the induction heating device 2000.

According to an embodiment of the disclosure, the processor 2200 may perform automatic cooking by controlling a power level or control the user interface 2500 to provide cooking guide information to a user, based on food temperature data obtained from the sensor device 1000. In addition, when internal temperature data obtained from the sensor device 1000 indicates that the internal temperature of the sensor device 1000 is higher than or equal to a reference temperature, the processor 2200 may output notification information about the sensor device 1000 or control the power level. Meanwhile, when information about a level of charge of the capacitor 1060 received from the sensor device 1000 indicates that the level of charge of the capacitor 1060 is lower than a threshold value, the processor 2200 may control the user interface 2500 to output information about the level of charge of the capacitor 1060.

The communication interface 2300 may include one or more elements for enabling communication between the induction heating device 2000 and the sensor device 1000 or between the induction heating device 2000 and a server device. For example, the communication interface 2300 may include a short-range wireless communication interface 2310 and a mobile communication interface 2320. The short-range wireless communication interface 2310 may include a Bluetooth communication interface, a BLE communication interface, an NFC interface, a WLAN (or Wi-Fi) communication interface, a Zigbee communication interface, an IrDA communication interface, a WFD communication interface, a UWB communication interface, or an Ant+ communication interface, but is not limited thereto. The mobile communication interface 2320 transmits and receives wireless signals to and from at least one of a base station, an external device, or a server on a mobile communication network. Herein, the wireless signals may include various types of data in accordance with transmission and reception of voice call signals, video call signals, or text/multimedia messages. The mobile communication interface 2320 may include a third-generation (3G) module, a fourth-generation (4G) module, a long-term evolution (LTE) module, a fifth-generation (5G) module, a sixth-generation (6G) module, a narrowband Internet of things (NB-loT) module, or a long-term evolution machine (LTE-M) module, but is not limited thereto.

According to an embodiment of the disclosure, the communication interface 2300 may receive, from the sensor device 1000, at least one of the food temperature data measured by the first temperature sensor 1010, the internal temperature data measured by the second temperature sensor 1020, or the information about the level of charge of the capacitor 1060.

The sensor 2400 may include a vessel detection sensor 2410 and a temperature sensor 2420, but is not limited thereto.

The vessel detection sensor 2410 may be a sensor for detecting the cooking vessel 10 placed on a top plate. For example, the vessel detection sensor 2410 may be implemented as a current sensor, but is not limited thereto. The vessel detection sensor 2410 may be implemented as at least one of a proximity sensor, a touch sensor, a weight sensor, a temperature sensor, an illumination sensor, or a magnetic sensor.

The temperature sensor 2420 may detect a temperature of the cooking vessel 10 placed on the top plate, or a temperature of the top plate. The cooking vessel 10 may be inductively heated by the working coil 2120, and be overheated depending on a material thereof. Therefore, the induction heating device 2000 may detect the temperature of the top plate or the cooking vessel 10 placed on the top plate, and stop the operation of the working coil 2120 when the cooking vessel 10 is overheated. The temperature sensor 2420 may be mounted in the vicinity of the working coil 2120. For example, the temperature sensor 2420 may be positioned at the center of the working coil 2120.

According to an embodiment of the disclosure, the temperature sensor 2420 may include a thermistor whose electrical resistance changes with temperature. For example, the temperature sensor 2420 may be an NTC temperature sensor, but is not limited thereto. The temperature sensor 2420 may be a PTC temperature sensor.

The user interface 2500 may include an output interface and an input interface 2530. The output interface is used to output audio signals or video signals, and may include a display 2510 and an audio outputter 2520.

When the display 2510 is layered with a touchpad to form a touchscreen, the display 2510 may be used not only as the output interface but also as the input interface 2530. The display 2510 may include at least one of a liquid crystal display (LCD), a thin film transistor-liquid crystal display (TFT-LCD), a light-emitting diode (LED), an organic light-emitting diode (OLED), a flexible display, a three-dimensional (3D) display, or an electrophoretic display. The induction heating device 2000 may include two or more displays 2510 depending on the implementation of the induction heating device 2000.

The audio outputter 2520 may output audio data received from the communication interface 2300 or stored in the memory 2600. In addition, the audio outputter 2520 may output an audio signal related to a function performed by the induction heating device 2000. The audio outputter 2520 may include a speaker or a buzzer.

According to an embodiment of the disclosure, the display 2510 may output a notification instructing to press the pairing button 1001, when the induction heating device 2000 and the sensor device 1000 are not paired with each other, or output a notification instructing to charge the capacitor 1060, when the level of charge of the capacitor 1060 of the sensor device 1000 is lower than or equal to the threshold value. In addition, the display 2510 may output information about a current power level, information about a current cooking mode, information about a current used cooking zone, information about a current temperature of the content of the cooking vessel 10, or cooking guide information.

The input interface 2530 is used to receive an input from the user. The input interface 2530 may include at least one of a keypad, a dome switch, a touchpad (e.g., a capacitive overlay, resistive overlay, infrared beam, surface acoustic wave, integral strain gauge, or piezoelectric touchpad), a jog wheel, or a jog switch, but is not limited thereto.

The input interface 2530 may include a speech recognition module. For example, the induction heating device 2000 may receive an analog speech signal through a microphone, and convert speech into computer-readable text by using an automatic speech recognition (ASR) model. The induction heating device 2000 may identify the intent of the utterance of the user by analyzing the converted text by using a natural language understanding (NLU) model. Herein, the ASR model or the NLU model may be an AI model. The AI model may be processed by a dedicated AI processor designed with a hardware structure specialized for processing AI models. The AI model may be made through training. Herein, being made through training means that a basic AI model is trained by a learning algorithm by using a plurality of pieces of training data and thus a predefined operation rule or AI model configured to achieve a desired feature (or purpose) is made. The AI model may include a plurality of neural network layers. Each of the plurality of neural network layers has a plurality of weight values and performs neural network computation through computation between a computation result of a previous layer and the plurality of weight values.

Linguistic understanding is a technology for recognizing and applying/processing human languages/characters, and includes natural language processing, machine translation, dialog systems, question answering, and speech recognition/synthesis.

The memory 2600 may store programs for processing and controlling by the processor 2200, and store input/output data (e.g., recipes, reference temperature data, and level of charge information of the capacitor 1060). The memory 2600 may store the AI model.

The memory 2600 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc. The induction heating device 2000 may use a web storage or cloud server which performs a storage function on the Internet.

An operation, performed by the induction heating device 2000, in association with the sensor device 1000 to provide an AI cook mode will now be described in detail.

FIG. 9 is a flowchart for describing a method of operating the sensor device 1000 and the induction heating device 2000, according to an embodiment of the disclosure.

In operation S910, the induction heating device 2000 according to an embodiment of the disclosure may receive a user input for selecting an AI cook mode. The AI cook mode may refer to a mode for performing automatic cooking by controlling a power level according to a temperature of food in the cooking vessel 10 (e.g., an automatic cooking mode), or a mode for providing cooking guide information to a user according to the temperature of the food in the cooking vessel 10 (e.g., a cooking guide mode).

According to an embodiment of the disclosure, the induction heating device 2000 may receive an input of the user for selecting an AI cook button included in the user interface 2500 of the induction heating device 2000, or a user voice command for selecting the AI cook mode.

In operation S920, when the user input for selecting the AI cook mode is received, the induction heating device 2000 according to an embodiment of the disclosure may be communicatively connected to the sensor device 1000 by establishing a short-range wireless communication channel therebetween. According to an embodiment of the disclosure, the short-range wireless communication channel may include a Bluetooth communication channel, a WFD communication channel, or a BLE communication channel, but is not limited thereto.

According to an embodiment of the disclosure, when the user input for selecting the AI cook mode is received, the induction heating device 2000 may transmit a communication connection request signal to the sensor device 1000. In this case, the communication interface 1030 of the sensor device 1000 may be operating in an active mode, and thus the sensor device 1000 may be communicatively connected to the induction heating device 2000 in response to the request signal of the induction heating device 2000. According to another embodiment of the disclosure, the sensor device 1000 may be communicatively connected to the induction heating device 2000 by switching an operation mode of the communication interface 1030 from a sleep mode to an active mode in response to the communication connection request of the induction heating device 2000.

Meanwhile, according to an embodiment of the disclosure, when the induction heating device 2000 is not previously paired with the sensor device 1000, the induction heating device 2000 may perform pairing first. For example, the induction heating device 2000 may output, through the user interface 2500, a notification instructing to press the pairing button 1001 of the sensor device 1000. When the user checks the notification and presses the pairing button 1001, the sensor device 1000 may operate in a sensing mode to allow the induction heating device 2000 to detect the sensor device 1000. In this case, the induction heating device 2000 may operate in a scan mode for detecting a neighboring device, to detect the sensor device 1000. When the induction heating device 2000 detects the sensor device 1000, the induction heating device 2000 may be paired with the sensor device 1000 to establish a short-range wireless communication channel (e.g., a Bluetooth communication channel) therebetween.

According to an embodiment of the disclosure, when the sensor device 1000 is previously fully discharged and thus communication connection with the induction heating device 2000 is released, the induction heating device 2000 may perform pairing with the sensor device 1000 again after the sensor device 1000 is charged.

In operation S930, when communicatively connected to the induction heating device 2000, the sensor device 1000 according to an embodiment of the disclosure may transmit food temperature data and internal temperature data to the induction heating device 2000. For example, the sensor device 1000 may transmit the food temperature data measured by the first temperature sensor 1010 and the internal temperature data measured by the second temperature sensor 1020, to the induction heating device 2000 in a certain cycle (e.g., in a cycle of 1 second). The certain cycle may be a cycle determined when the sensor device 1000 is manufactured, or a cycle requested by the induction heating device 2000. The operation, performed by the induction heating device 2000, of determining a data transmission cycle of the sensor device 1000 will be described in detail below with reference to FIG. 20.

In operation S940, the induction heating device 2000 according to an embodiment of the disclosure may perform automatic cooking or output cooking guide information, based on the food temperature data and pre-stored recipe information. As information about a method of cooking a food selected by the user in the AI cook mode, the pre-stored recipe information may include types of ingredients, quantities of the ingredients, a cooking time, a cooking order, and a cooking method, but is not limited thereto.

According to an embodiment of the disclosure, the induction heating device 2000 may perform automatic cooking by checking the pre-stored recipe, based on the food temperature data received from the sensor device 1000. For example, the induction heating device 2000 may automatically cook a food such as porridge by automatically adjusting a power level, based on the food temperature data.

According to an embodiment of the disclosure, when the food selected by the user requires involvement of the user, the induction heating device 2000 may output the cooking guide information, based on the food temperature data and the pre-stored recipe information. The cooking guide information may be information for guiding the user through ingredient preparation and cooking. For example, when the user selects a steak, and when the cooking vessel 10 is sufficiently preheated, the induction heating device 2000 may output guide information instructing to insert the sensor device 1000 into meat and put the meat on the cooking vessel 10. In addition, when temperature data of the meat received from the sensor device 1000 indicates that the temperature of the meat reaches a certain temperature, the induction heating device 2000 may output guide information instructing to flip the meat.

In operation S950, the induction heating device 2000 according to an embodiment of the disclosure may compare the internal temperature data of the sensor device 1000 to reference temperature data. The reference temperature data may be data about a reference temperature at which the risk of damage to an internal component of the sensor device 1000 is rapidly increased. For example, the reference temperature may be a threshold temperature (e.g., 70°C) which may affect the lifetime of the capacitor 1060 (e.g., a supercapacitor).

When the result of comparing the internal temperature data to the reference temperature data indicates that the internal temperature of the sensor device 1000 is lower than the reference temperature, the possibility of a problem occurring in the internal component of the sensor device 1000 (e.g., a reduction in lifetime or explosion of the capacitor 1060) may be low and thus the induction heating device 2000 may continuously monitor the internal temperature of the sensor device 1000 while performing automatic cooking or outputting the cooking guide information, based on the food temperature data.

In operation S960, when the internal temperature data of the sensor device 1000 received from the sensor device 1000 is higher than or equal to the reference temperature data, the induction heating device 2000 according to an embodiment of the disclosure may output notification information about the sensor device 1000 or control a power level of the induction heating device 2000.

For example, when the sensor device 1000 is improperly mounted on the cooking vessel 10 and thus falls into the cooking vessel 10 (e.g., a pot), or when meat is excessively thin and thus the sensor body 1100 is adjacent to the cooking vessel 10 (e.g., a grill pan), the internal temperature data of the sensor device 1000 may be increased. In this case, when the internal temperature data of the sensor device 1000 is increased above the reference temperature data (e.g., 70°C), the internal component of the sensor device 1000 (e.g., the capacitor 1060) may experience a reduction in lifetime or explosion, or the user may get burned to grab the sensor device 1000. Therefore, when the internal temperature data of the sensor device 1000 is increased above the reference temperature data, the induction heating device 2000 may output the notification information about the sensor device 1000 through the display 2510 included in the user interface 2500. Alternatively, when the internal temperature data of the sensor device 1000 is higher than or equal to the reference temperature data, the induction heating device 2000 may output the notification information about the sensor device 1000 as a voice signal through the audio outputter 2520. The notification information about the sensor device 1000 may include a notification indicating that the internal temperature data of the sensor device 1000 is increased above the reference temperature data, a notification instructing to check a position of the sensor device 1000, or a notification instructing to change the position of the sensor device 1000, but is not limited thereto.

Meanwhile, according to an embodiment of the disclosure, when the internal temperature data of the sensor device 1000 is higher than or equal to the reference temperature data, the induction heating device 2000 may automatically control the power level to reduce the internal temperature data of the sensor device 1000 below the reference temperature data. According to an embodiment of the disclosure, when the internal temperature data of the sensor device 1000 is rapidly increased, the induction heating device 2000 may stop transmitting power to the cooking vessel 10. For example, the induction heating device 2000 may control the inverter circuit 2113 to stop supplying a current to the working coil 2120.

According to an embodiment of the disclosure, when the internal temperature data of the sensor device 1000 is increased above the reference temperature data, damage to the internal component of the sensor device 1000 caused by heat may be prevented and a risk of burns to the user may be reduced by providing the notification information about the sensor device 1000 or controlling the power level of the induction heating device 2000.

Meanwhile, operation S940 in which the induction heating device 2000 performs automatic cooking or output the cooking guide information, based on the food temperature data and operation S950 in which the induction heating device 2000 compares the internal temperature data of the sensor device 1000 to the reference temperature data are performed sequentially in FIG. 9, but are not limited thereto. Operations S940 and S950 may be performed simultaneously, or operation S940 may be performed after operation S950.

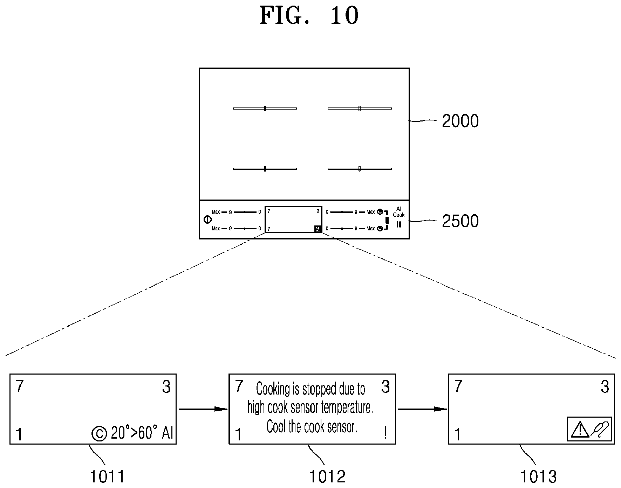

The operation, performed by the induction heating device 2000, of outputting the notification information about the sensor device 1000 when the internal temperature data of the sensor device 1000 is higher than or equal to the reference temperature data will now be described in detail with reference to FIG. 10.

FIG. 10 is a diagram for describing an operation, performed by the induction heating device 2000, of outputting notification information when internal temperature data of the sensor device 1000 is higher than or equal to reference temperature data, according to an embodiment of the disclosure.

Referring to FIG. 10, the induction heating device 2000 may operate in an AI cook mode while communicating with the sensor device 1000. In this case, referring to reference numeral 1011 of FIG. 10, when the cooking vessel 10 is placed on a front right cooking zone, the induction heating device 2000 may display 'AI' representing an AI cook mode on a front right region of the display 2510 included in the user interface 2500. In addition, when a target temperature of food is set to be 60 °C , the induction heating device 2000 may display information indicating that a temperature of food is changing from 20 °C to 60 °C, on the front right region of the display 2510, based on food temperature data received from the sensor device 1000.

According to an embodiment of the disclosure, the induction heating device 2000 may detect that internal temperature data of the sensor device 1000 reaches or is increased above reference temperature data, while operating in the AI cook mode. For example, a user may improperly mount the sensor device 1000 on the cooking vessel 10, and thus the internal temperature data of the sensor device 1000 may be increased above the reference temperature data (e.g., 70°C). In this case, referring to reference numeral 1012 of FIG. 10, the induction heating device 2000 may terminate the AI cook mode and output a notification about the sensor device 1000 through the display 2510. For example, the induction heating device 2000 may output a notification such as 'Cooking is stopped due to high cook sensor temperature. Cool the cook sensor'. Meanwhile, terminating the AI cook mode may mean stopping power transmission to the cooking vessel 10.

Referring to reference numeral 1013 of FIG. 10, the induction heating device 2000 may display, on the front right region of the display 2510, an icon of an error message indicating that the internal temperature data of the sensor device 1000 reaches the reference temperature data (e.g., 70°C).

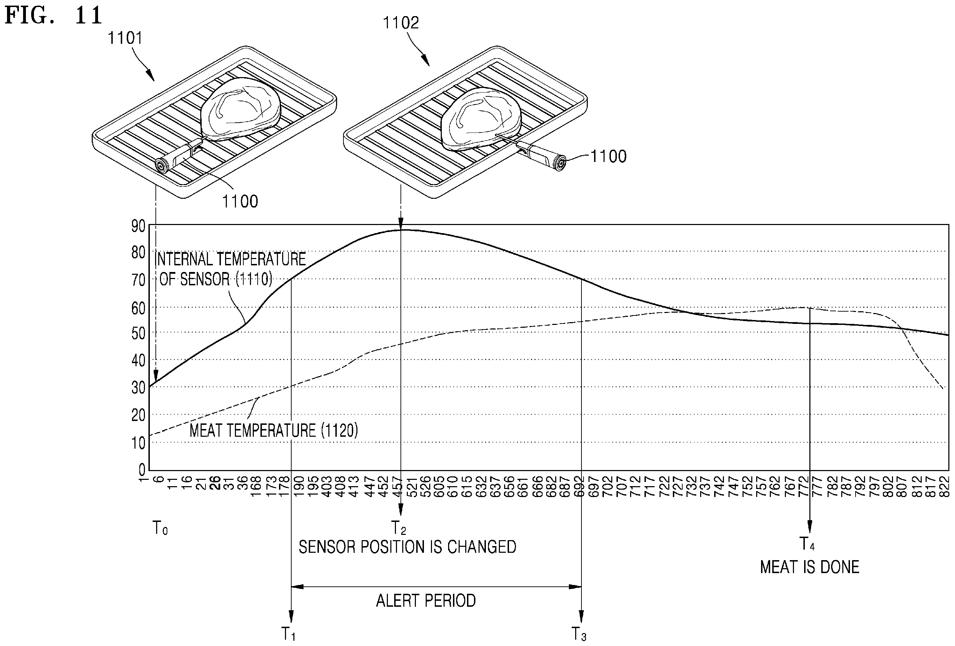

According to an embodiment of the disclosure, the user may check a position of the sensor device 1000, based on the notification, and change the position of the sensor device 1000 when the sensor device 1000 is improperly mounted. Meanwhile, although not shown in FIG. 10, according to an embodiment of the disclosure, the induction heating device 2000 may directly output a notification instructing to change the position of the sensor device 1000. A change in the internal temperature data of the sensor device 1000 when the user checks the notification and changes the position of the sensor device 1000 will now be described with reference to FIG. 11.

FIG. 11 is a diagram for describing a change in internal temperature data due to a change in position of the sensor device 1000, according to an embodiment of the disclosure.

Referring to reference numeral 1101 of FIG. 11, a user may improperly insert the sensor device 1000 into meat and thus the sensor body 1100 of the sensor device 1000 may be positioned in the cooking vessel 10 (e.g., a pan). In this case, an internal temperature of the sensor device 1000 may be rapidly increased due to a temperature of the cooking vessel 10. For example, referring to a first line 1110 representing the internal temperature of the sensor device 1000, the internal temperature of the sensor device 1000 may be about 30°C at timing T₀ when the sensor device 1000 is initially inserted into the meat, and then be gradually increased to about 90°C over time.

In this case, the induction heating device 2000 may output a notification (e.g., a notification instructing to check a position of the sensor device 1000) from timing T₁ when internal temperature data measured by the second temperature sensor 1020 of the sensor device 1000 reaches reference temperature data (e.g., 70°C). The user may check the notification output by the induction heating device 2000, and change the position of the sensor device 1000 at timing T₂. For example, referring to reference numeral 1102 of FIG. 11, the user may pull out the sensor device 1000 from the meat, and then insert the sensor device 1000 again in such a manner that the sensor body 1100 is positioned outside the cooking vessel 10. Referring to the first line 1110, the internal temperature of the sensor device 1000 may be gradually reduced from timing T₂ when the user changes the position of the sensor device 1000 and be reduced below the reference temperature data (e.g., 70°C) after timing T₃.

Meanwhile, referring to a second line 1120 representing food temperature data measured by the first temperature sensor 1010, the meat may be continuously increased in temperature from timing T₀ and be done at timing T₄ (e.g., 774 sec.) when the temperature of the meat reaches a certain temperature (e.g., 60 °C). The induction heating device 2000 may stop transmitting power to the cooking vessel 10 at timing T₄ when the meat is done, and output, to the user, a notification indicating that the meat is done.

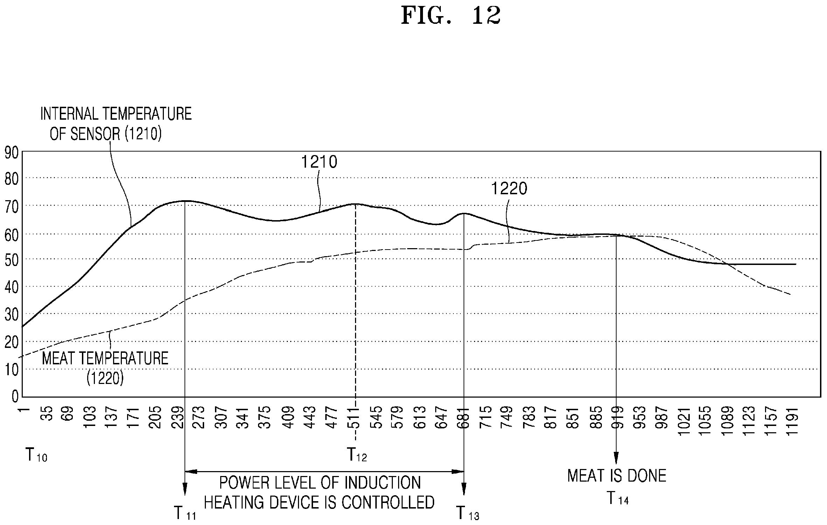

According to an embodiment of the disclosure, when the internal temperature data of the sensor device 1000 reaches or is increased above the reference temperature data, the induction heating device 2000 may directly control a power level instead of providing a notification about the sensor device 1000. A change in the internal temperature data of the sensor device 1000 when the induction heating device 2000 controls the power level will now be described with reference to FIG. 12.

FIG. 12 is a diagram for describing a change in internal temperature data due to a control of a power level of the induction heating device 2000, according to an embodiment of the disclosure.

Referring to FIG. 12, the induction heating device 2000 according to an embodiment of the disclosure may monitor internal temperature data received from the sensor device 1000, and control a power level of the induction heating device 2000 when the internal temperature data of the sensor device 1000 is higher than or equal to reference temperature data (e.g., 70°C) (e.g., at timing T₁₁). For example, the induction heating device 2000 may reduce the power level from a first power level (e.g., level 9) to a second power level (e.g., level 5). In this case, referring to a first line 1210 representing the internal temperature data measured by the second temperature sensor 1020, the internal temperature data of the sensor device 1000 may be reduced below the reference temperature data (e.g., 70°C).

When the internal temperature data of the sensor device 1000 is reduced below the reference temperature data (e.g., 70°C), the induction heating device 2000 may increase the power level again. For example, the induction heating device 2000 may increase the power level from the second power level (e.g., level 5) to a third power level (e.g., level 7). In this case, when the internal temperature data of the sensor device 1000 reaches the reference temperature data (e.g., 70°C) again (e.g., at timing T₁₂), the induction heating device 2000 may reduce the power level again. For example, the sensor device 1000 may reduce the power level from the third power level (e.g., level 7) to the second power level (e.g., level 5) again.

When the induction heating device 2000 maintains the power level at the second power level (e.g., level 5), the internal temperature data of the sensor device 1000 may be reduced below the reference temperature data (e.g., 70°C) and then reach the reference temperature data again (e.g., at timing T₁₃). In this case, the induction heating device 2000 may further reduce the power level from the second power level (e.g., level 5) to a fourth power level (e.g., level 3). When the induction heating device 2000 maintains the power level at the fourth power level (e.g., level 3), the internal temperature data of the sensor device 1000 may be maintained below the reference temperature data (e.g., 70°C).

Meanwhile, referring to a second line 1220 representing food temperature data measured by the first temperature sensor 1010, meat may be continuously increased in temperature from timing T₁₀ and be done at timing T₁₄ (e.g., 919 sec.) when the temperature of the meat reaches a certain temperature (e.g., 60 °C). The induction heating device 2000 may stop transmitting power to the cooking vessel 10 at timing T₁₄ (e.g., 919 sec.) when the meat is done, and output, to a user, a notification indicating that the meat is done.

When the second line 1120 of FIG. 11 is compared to the second line 1220 of FIG. 12, it is shown that the meat is done at 774 sec. when the user changes a position of the sensor device 1000 to adjust the internal temperature data of the sensor device 1000 below the reference temperature data, and is done at 919 sec. when the induction heating device 2000 dynamically controls the power level to reduce the internal temperature data of the sensor device 1000 below the reference temperature data. That is, a slightly longer time may be taken to cook the meat when the induction heating device 2000 dynamically controls the power level compared to a case in which the user changes the position of the sensor device 1000, but the meat may be stably cooked in both cases.

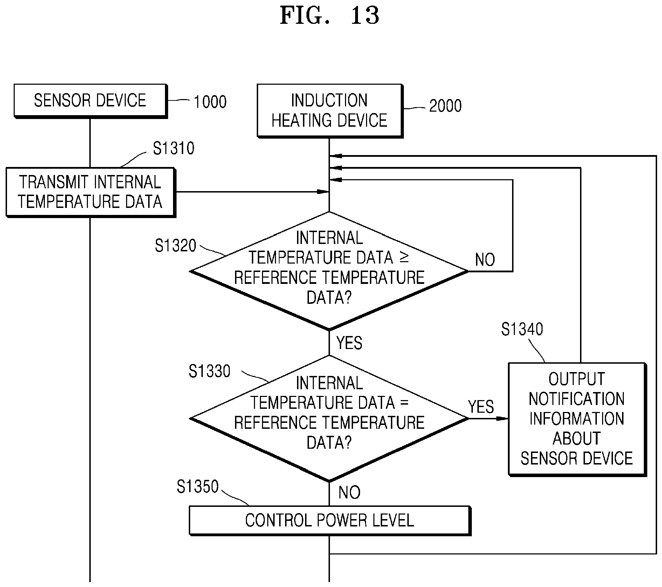

Meanwhile, according to an embodiment of the disclosure, the induction heating device 2000 may apply the operation of providing the notification to the user and the operation of controlling the power level step by step in relation to the internal temperature of the sensor device 1000. A detailed description thereof will now be provided with reference to FIG. 13.

FIG. 13 is a flowchart for describing a method, performed by the induction heating device 2000, of controlling operation when internal temperature data is higher than or equal to reference temperature data, according to an embodiment of the disclosure. FIG. 13 assumes that the sensor device 1000 is communicatively connected to the induction heating device 2000.

In operation S1310, the sensor device 1000 according to an embodiment of the disclosure may transmit, to the induction heating device 2000, internal temperature data measured by the second temperature sensor 1020. According to an embodiment of the disclosure, the internal temperature data may be transmitted to the induction heating device 2000 in a certain cycle (e.g., a cycle of 1 second).

In operation S1320, the induction heating device 2000 according to an embodiment of the disclosure may determine whether the internal temperature data of the sensor device 1000 is higher than or equal to the reference temperature data. When the internal temperature data of the sensor device 1000 is lower than the reference temperature data, the induction heating device 2000 may continuously monitor the internal temperature data of the sensor device 1000 while operating in an AI cook mode.

In operations S1330 and S1340, when the internal temperature data of the sensor device 1000 reaches the reference temperature data (e.g., 70°C), the induction heating device 2000 according to an embodiment of the disclosure may initially output notification information about the sensor device 1000. When the internal temperature data of the sensor device 1000 is maintained at the reference temperature data (e.g., 70°C), the induction heating device 2000 may output the notification information about the sensor device 1000 continuously or in a certain cycle.

The notification information about the sensor device 1000 may include a notification indicating that the internal temperature data of the sensor device 1000 is increased above the reference temperature data, a notification instructing to check a position of the sensor device 1000, or a notification instructing to change the position of the sensor device 1000, but is not limited thereto.

According to an embodiment of the disclosure, the induction heating device 2000 may output the notification information about the sensor device 1000 as text on the display 2510, or as voice through the audio outputter 2520 (e.g., a speaker).

In operation S1350, when the internal temperature data of the sensor device 1000 is higher than the reference temperature data, the induction heating device 2000 according to an embodiment of the disclosure may control a power level.

According to an embodiment of the disclosure, when the internal temperature data of the sensor device 1000 is increased to 71 °C higher than the reference temperature data (e.g., 70°C), the induction heating device 2000 may dynamically control the power level of the induction heating device 2000. For example, when the internal temperature data of the sensor device 1000 is increased to 71 °C higher than the reference temperature data (e.g., 70°C), the induction heating device 2000 may reduce the power level of the induction heating device 2000 or stop transmitting power to the cooking vessel 10.

Therefore, according to an embodiment of the disclosure, the induction heating device 2000 may initially output the notification about the sensor device 1000 when the internal temperature data of the sensor device 1000 reaches the reference temperature data (e.g., 70°C), and then control the power level of the induction heating device 2000 when the internal temperature data is higher than the reference temperature data (e.g., 70 °C).

Meanwhile, according to an embodiment of the disclosure, in addition to the internal temperature data and the food temperature data, the sensor device 1000 may also transmit information about a level of charge of the capacitor 1060 to the induction heating device 2000. The operation, performed by the sensor device 1000, of transmitting the information about the level of charge of the capacitor 1060 to the induction heating device 2000 will now be described with reference to FIG. 14.

FIG. 14 is a flowchart for describing a method, performed by the induction heating device 2000, of outputting a notification about a level of charge of the capacitor 1060 of the sensor device 1000, according to an embodiment of the disclosure.

In operation S1410, the sensor device 1000 according to an embodiment of the disclosure may be communicatively connected to the induction heating device 2000. For example, the sensor device 1000 may be communicatively connected to the induction heating device 2000 by establishing a short-range wireless communication channel therebetween. According to an embodiment of the disclosure, the short-range wireless communication channel may include a Bluetooth communication channel, a WFD communication channel, or a BLE communication channel, but is not limited thereto.

In operation S1420, the sensor device 1000 according to an embodiment of the disclosure may transmit information about a level of charge of the capacitor 1060 to the induction heating device 2000. For example, the sensor device 1000 may transmit the information about the level of charge of the capacitor 1060 to the induction heating device 2000 through the short-range wireless communication channel (e.g., a Bluetooth communication channel or a WFD communication channel).

The information about the level of charge of the capacitor 1060 may include at least one of data about a current level of charge of the capacitor 1060, data about a remaining operating time of the capacitor 1060, or data about whether the capacitor 1060 needs to be charged, but is not limited thereto.

According to an embodiment of the disclosure, the sensor device 1000 may transmit the information about the level of charge of the capacitor 1060 to the induction heating device 2000 in a certain cycle. For example, the sensor device 1000 may transmit the information about the level of charge of the capacitor 1060 to the induction heating device 2000 in a cycle of 1 second. According to an embodiment of the disclosure, the certain cycle may be changed based on the level of charge of the capacitor 1060, an operating time of the induction heating device 2000, or a cooking mode set in the induction heating device 2000. An embodiment in which the certain cycle for transmitting the information about the level of charge of the capacitor 1060 is changed will be described in detail below with reference to FIG. 20.

In operation S1430, the induction heating device 2000 may compare the level of charge of the capacitor 1060 to a threshold value, based on the information about the level of charge of the capacitor 1060 received from the sensor device 1000. The threshold value may refer to the minimum capacity of the capacitor 1060 required by the sensor device 1000 to assist the induction heating device 2000 to operate in an AI cook mode.

According to an embodiment of the disclosure, when the level of charge of the capacitor 1060 is higher than or equal to the threshold value (e.g., 30%), the induction heating device 2000 may continuously monitor the level of charge of the capacitor 1060 of the sensor device 1000 while operating in the AI cook mode. For example, when the level of charge of the capacitor 1060 is higher than or equal to the threshold value (e.g., 30%), the induction heating device 2000 may continuously monitor the level of charge of the capacitor 1060 of the sensor device 1000 while performing automatic cooking or outputting cooking guide information, based on food temperature data received from the sensor device 1000.

In operation S1440, when the level of charge of the capacitor 1060 of the sensor device 1000 is lower than the threshold value, the induction heating device 2000 according to an embodiment of the disclosure may output a notification about the level of charge of the capacitor 1060 of the sensor device 1000. The notification about the level of charge of the capacitor 1060 of the sensor device 1000 may include a notification indicating that the level of charge of the capacitor 1060 is not sufficient or a notification instructing to charge the capacitor 1060 of the sensor device 1000, but is not limited thereto.

According to an embodiment of the disclosure, when the level of charge of the capacitor 1060 of the sensor device 1000 is lower than the threshold value (e.g., 30%), the induction heating device 2000 may output the notification about the level of charge of the capacitor 1060 of the sensor device 1000 through the display 2510 or the audio outputter 2520 (e.g., a speaker).

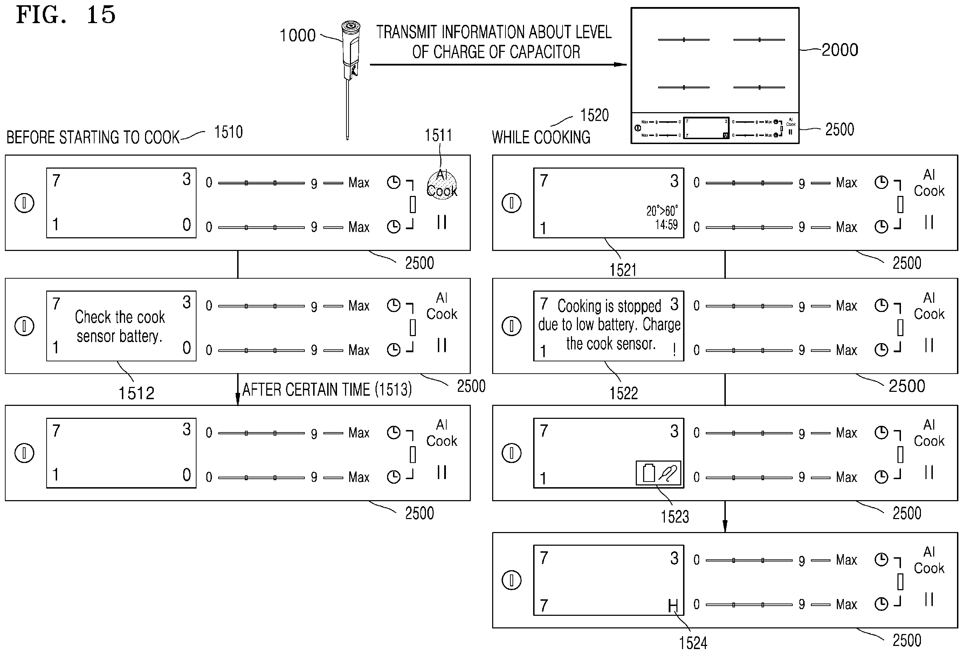

The operation, performed by the induction heating device 2000, of outputting the notification about the level of charge of the capacitor 1060 of the sensor device 1000 will now be described in detail with reference to FIG. 15.

FIG. 15 is a diagram for describing an operation, performed by the induction heating device 2000, of outputting a notification about a level of charge of the capacitor 1060 of the sensor device 1000, according to an embodiment of the disclosure.

Referring to reference numeral 1510 of FIG. 15, the induction heating device 2000 may output a notification about a level of charge of the capacitor 1060 before starting to cook.

According to an embodiment of the disclosure, when a user input for selecting an AI cook button 1511 is received, the induction heating device 2000 may be communicatively connected to the sensor device 1000. The induction heating device 2000 may receive information about the level of charge of the capacitor 1060 of the sensor device 1000 from the sensor device 1000. In this case, when the level of charge of the capacitor 1060 of the sensor device 1000 is merely 10%, the induction heating device 2000 may determine that the level of charge of the capacitor 1060 of the sensor device 1000 is lower than a threshold value (e.g., 30%), and output the notification about the level of charge of the capacitor 1060. For example, the induction heating device 2000 may output a notification 1512 such as 'Check the cook sensor battery (or capacitor) '). The induction heating device 2000 may not start an AI cook mode because the level of charge of the capacitor 1060 of the sensor device 1000 is insufficient. Meanwhile, after a certain time (e.g., 3 seconds) from when the notification 1512 is output (see reference numeral 1513), the induction heating device 2000 may no longer output the notification 1512.

Referring to reference numeral 1520 of FIG. 15, the induction heating device 2000 may output a notification about a level of charge of the capacitor 1060 of the sensor device 1000 while cooking.

According to an embodiment of the disclosure, the induction heating device 2000 may receive food temperature data and information about the level of charge of the capacitor 1060 from the sensor device 1000 in a certain cycle while operating in an AI cook mode. The induction heating device 2000 may perform automatic cooking or output cooking guide information, based on the food temperature data. In this case, when the level of charge of the capacitor 1060 of the sensor device 1000 is initially 50% and then goes below a threshold value (e.g., 10%), the induction heating device 2000 may output the notification about the level of charge of the capacitor 1060 of the sensor device 1000. For example, the induction heating device 2000 may output a notification 1522 such as 'Cooking is stopped due to low battery (or capacitor). Charge the cook sensor'. In addition, the induction heating device 2000 may display, on the user interface 2500, an icon 1523 indicating that the level of charge of the capacitor 1060 of the sensor device 1000 is insufficient.

Meanwhile, when the level of charge of the capacitor 1060 is insufficient, the induction heating device 2000 may no more operate in association with the sensor device 1000 and thus terminate the AI cook mode. In addition, the induction heating device 2000 may stop transmitting power to the cooking vessel 10. In this case, heat may remain on a top plate of the induction heating device 2000 and thus the induction heating device 2000 may display, on the user interface 2500, an icon 1524 indicating residual heat (e.g., H).

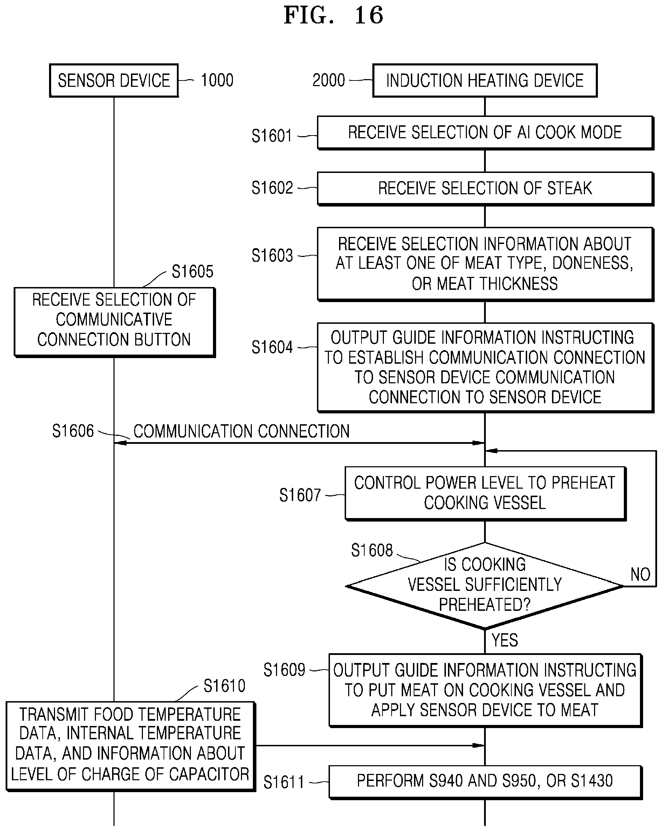

According to an embodiment of the disclosure, a user may charge the capacitor 1060 of the sensor device 1000 by connecting the sensor body 1100 to the charger 1200, based on the notification about the level of charge of the capacitor 1060 of the sensor device 1000. Meanwhile, when the capacitor 1060 of the sensor device 1000 is charged, the sensor device 1000 may assist or support the induction heating device 2000 to operate in the AI cook mode again. An operation, performed by the induction heating device 2000, of guiding a user through a recipe for a specific food in association with the sensor device 1000 will now be described in detail with reference to FIG. 16.

FIG. 16 is a flowchart for describing a method, performed by the induction heating device 2000, of outputting guide information for a steak in association with the sensor device 1000, according to an embodiment of the disclosure.

In operation S1601, the induction heating device 2000 according to an embodiment of the disclosure may receive a user input for selecting an AI cook mode.

The AI cook mode may include a mode for performing automatic cooking by dynamically controlling a power level according to a temperature of food in the cooking vessel 10 (e.g., an automatic cooking mode), or a mode for providing cooking guide information to a user according to the temperature of the food in the cooking vessel 10 (e.g., a cooking guide mode), but is not limited thereto.

According to an embodiment of the disclosure, the induction heating device 2000 may receive an input of the user for selecting an AI cook button included in the user interface 2500 of the induction heating device 2000, or a user voice command for selecting the AI cook mode.

In operation S1602, the induction heating device 2000 according to an embodiment of the disclosure may receive an input for selecting a steak.

According to an embodiment of the disclosure, the induction heating device 2000 may provide a graphical user interface (GUI) for selecting from among types of foods supported by the AI cook mode. The user may select a steak through the GUI.

In operation S1603, the induction heating device 2000 according to an embodiment of the disclosure may receive, through the user interface 2500, selection information about at least one of a meat type, doneness, or a meat thickness.

According to an embodiment of the disclosure, the meat type may include beef, pork, chicken, duck, or lamb, but is not limited thereto. The doneness may include rare, medium rare, medium, medium well, or well-done, but is not limited thereto. The meat thickness may include 2cm, 2.5cm, 3cm, 3.5cm, 4cm, 4.5cm, or 5cm, but is not limited thereto and may include an arbitrary value input by the user.

For example, when the user selects a steak through the GUI, the induction heating device 2000 may display, on the GUI, a menu screen for selecting the meat type, the doneness, or the meat thickness. In this case, the induction heating device 2000 may receive, through the menu screen, a user input for selecting at least one of the meat type, the doneness, or the meat thickness. For example, the user may select 'Beef' as the meat type, select 'Medium rare' as the doneness, or select '3.5cm' as the meat thickness through the menu screen.

In operation S1604, the induction heating device 2000 according to an embodiment of the disclosure may output, through the user interface 2500, guide information instructing to establish a communication connection to the sensor device 1000.

According to an embodiment of the disclosure, when not paired with the sensor device 1000, the induction heating device 2000 may output guide information instructing to press the pairing button 1001 of the sensor device 1000.

In operation S1605, the sensor device 1000 according to an embodiment of the disclosure may receive an input for selecting a communication connection button. For example, the sensor device 1000 may detect a user input for pressing the pairing button 1001.

In operation S1606, the sensor device 1000 and the induction heating device 2000 according to an embodiment of the disclosure may be communicatively connected to each other by establishing a short-range wireless communication channel therebetween.

According to an embodiment of the disclosure, when the user presses the pairing button 1001, the sensor device 1000 may operate in a sensing mode to allow the induction heating device 2000 to detect the sensor device 1000. In this case, the induction heating device 2000 may operate in a scan mode for detecting a neighboring device, to detect the sensor device 1000. When the induction heating device 2000 detects the sensor device 1000, the induction heating device 2000 may be paired with the sensor device 1000 to establish a short-range wireless communication channel (e.g., a Bluetooth communication channel) therebetween.

Meanwhile, when the sensor device 1000 and the induction heating device 2000 are previously paired with each other, operations S1604 and S1605 may be omitted.

In operation S1607, the induction heating device 2000 according to an embodiment of the disclosure may control a power level to preheat the cooking vessel 10. For example, the induction heating device 2000 may preheat the cooking vessel 10 at the maximum power level for a certain time. The certain time may vary depending on the type of meat. For example, when the type of meat is beef, the induction heating device 2000 may transmit power to the cooking vessel 10 at the maximum power level for 3 minutes to preheat the cooking vessel 10 to 250°C. When the type of meat is pork, the induction heating device 2000 may transmit power to the cooking vessel 10 at the maximum power level for 2 minutes to preheat the cooking vessel 10 to 200°C.

In operation S1608, the induction heating device 2000 according to an embodiment of the disclosure may determine whether the cooking vessel 10 is sufficiently preheated.

According to an embodiment of the disclosure, the induction heating device 2000 may determine a preheating temperature depending on the type of meat, and detect a temperature of the cooking vessel 10 placed on a top plate, or a temperature of the top plate indirectly heated by the cooking vessel 10, by using the temperature sensor 2420. The temperature sensor 2420 may be mounted in the vicinity of the working coil 2120. For example, the temperature sensor 2420 may be positioned at the center of the working coil 2120. The induction heating device 2000 may predict whether the temperature of the cooking vessel 10 reaches the preheating temperature, based on the temperature of the cooking vessel 10 or the top plate measured by the temperature sensor 2420.

According to an embodiment of the disclosure, the induction heating device 2000 may determine a preheating time by calculating an average of preheating times according to a type of the cooking vessel 10. After heating the cooking vessel 10 at a certain power level (e.g., the maximum power level) for the determined preheating time, the induction heating device 2000 may determine that preheating is done.

Upon determining that the cooking vessel 10 is not sufficiently preheated, the induction heating device 2000 may continuously maintain a current power level. For example, when the current power level is set as the maximum power level, the induction heating device 2000 may maintain the power level at the maximum power level.

In operation S1609, when the cooking vessel 10 is sufficiently preheated, the induction heating device 2000 according to an embodiment of the disclosure may output guide information instructing to put meat on the cooking vessel 10 and apply the sensor device 1000 to the meat. In this case, according to the guide information, the user may insert the probe 1004 including the first temperature sensor 1010, into the meat, and put the meat on the cooking vessel 10 (e.g., a grill pan).

Meanwhile, when the cooking vessel 10 is sufficiently preheated, the induction heating device 2000 may reduce the power level from the maximum power level (e.g., level 10) to a first power level (e.g., level 8).

In operation S1610, the sensor device 1000 according to an embodiment of the disclosure may transmit, to the induction heating device 2000, food temperature data measured by the first temperature sensor 1010, internal temperature data measured by the second temperature sensor 1020, and information about a level of charge of the capacitor 1060.

For example, the sensor device 1000 may measure temperature data of the meat by using the first temperature sensor 1010, and transmit the temperature data of the meat to the induction heating device 2000 in a certain cycle. In this case, the sensor device 1000 may also transmit the internal temperature data of the sensor device 1000 and the information about the level of charge of the capacitor 1060 of the sensor device 1000 to the induction heating device 2000 in a certain cycle.

According to an embodiment of the disclosure, the sensor device 1000 may transmit the food temperature data, the internal temperature data, and the information about the level of charge of the capacitor 1060 to the induction heating device 2000 through a short-range wireless communication channel (e.g., a Bluetooth communication channel).

In operation S1611, the induction heating device 2000 according to an embodiment of the disclosure may perform operations S940 and S950 of FIG. 9 or operation S1430 of FIG. 14 by using the food temperature data, the internal temperature data, and the information about the level of charge of the capacitor 1060.

According to an embodiment of the disclosure, the induction heating device 2000 may output cooking guide information, based on the temperature data of the meat measured by the first temperature sensor 1010, and pre-stored recipe information. For example, when the temperature of the meat reaches a first temperature, or after a certain time (e.g., 2 minutes), the induction heating device 2000 may output guide information instructing to flip the meat. When the temperature of the meat reaches a second temperature, the induction heating device 2000 may output guide information instructing to reduce the power level. In this case, the second temperature may vary depending on the doneness. For example, the second temperature may be 49°C when the doneness is rare, 52 °C when the doneness is medium rare, or 54°C when the doneness is medium. In addition, the induction heating device 2000 may output guide information instructing to butter both surfaces of the meat.

According to an embodiment of the disclosure, the induction heating device 2000 may compare the internal temperature data of the sensor device 1000 to reference temperature data. When the result of comparing the internal temperature data to the reference temperature data indicates that the internal temperature of the sensor device 1000 is lower than the reference temperature, the possibility of a problem occurring in an internal component of the sensor device 1000 (e.g., a reduction in lifetime or explosion of the capacitor 1060) may be low and thus the induction heating device 2000 may continuously monitor the internal temperature data of the sensor device 1000 while outputting the cooking guide information, based on the temperature data of the meat.

When the internal temperature data of the sensor device 1000 received from the sensor device 1000 is higher than or equal to the reference temperature data, the induction heating device 2000 according to an embodiment of the disclosure may output notification information about the sensor device 1000 or control the power level of the induction heating device 2000. For example, when the meat is excessively thin and thus the sensor body 1100 is adjacent to the cooking vessel 10, the internal temperature data of the sensor device 1000 may be increased. In this case, when the internal temperature data of the sensor device 1000 is increased above the reference temperature data (e.g., 70°C), the internal component of the sensor device 1000 (e.g., the capacitor 1060) may experience a reduction in lifetime or explosion, or the user may get burned to grab the sensor device 1000. Therefore, when the internal temperature data of the sensor device 1000 is increased above the reference temperature data, the induction heating device 2000 may output the notification information about the sensor device 1000 through the user interface 2500. The notification information about the sensor device 1000 may include a notification indicating that the internal temperature data of the sensor device 1000 is increased above the reference temperature data, a notification instructing to check a position of the sensor device 1000, or a notification instructing to change the position of the sensor device 1000, but is not limited thereto.

According to an embodiment of the disclosure, the induction heating device 2000 may compare the level of charge of the capacitor 1060 to a threshold value, based on the information about the level of charge of the capacitor 1060 received from the sensor device 1000. According to an embodiment of the disclosure, when the level of charge of the capacitor 1060 is higher than or equal to the threshold value (e.g., 30%), the induction heating device 2000 may continuously monitor the level of charge of the capacitor 1060 of the sensor device 1000 while outputting the cooking guide information, based on the temperature data of the meat received from the sensor device 1000.

When the level of charge of the capacitor 1060 of the sensor device 1000 is lower than the threshold value, the induction heating device 2000 according to an embodiment of the disclosure may output a notification about the level of charge of the capacitor 1060 of the sensor device 1000. The notification about the level of charge of the capacitor 1060 of the sensor device 1000 may include a notification indicating that the level of charge of the capacitor 1060 is not sufficient or a notification instructing to charge the capacitor 1060 of the sensor device 1000, but is not limited thereto.

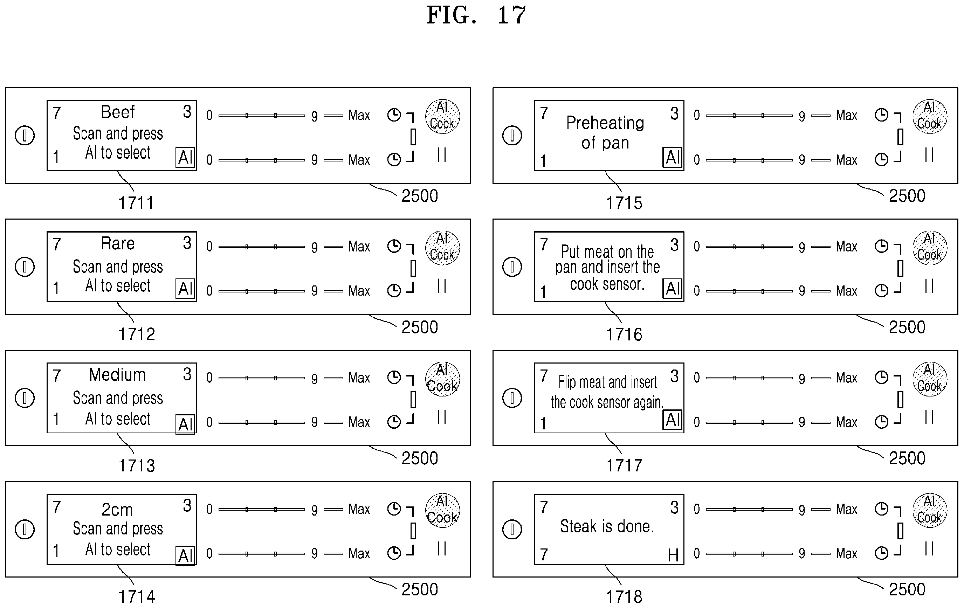

The operation, performed by the induction heating device 2000, of outputting guide information for a steak through the user interface 2500 will now be described in detail with reference to FIG. 17.

FIG. 17 is a diagram for describing an operation, performed by the induction heating device 2000, of outputting guide information for a steak in association with the sensor device 1000, according to an embodiment of the disclosure.

Referring to FIG. 17, a user may select an Al cook button, and the induction heating device 2000 may provide a food list. When the user selects a steak in the food list, the induction heating device 2000 may provide a first GUI for selecting a type of meat. The user may select 'Beef' 1711 through the first GUI. When the user selects'Beef' 1711, the induction heating device 2000 may provide a second GUI for selecting doneness of meat. The user may select'Rare' 1712 or'Medium' 1713 as the doneness of meat through the second GUI.

When the user selects the doneness, the induction heating device 2000 may provide a third GUI for selecting a thickness of meat. The user may select the thickness of meat to be cooked, through the third GUI. For example, the user may select'2cm' 1714 as the thickness of meat.

When the user selects the thickness of meat, the induction heating device 2000 may start to preheat the cooking vessel 10. For example, the induction heating device 2000 may select 250°C as a preheating temperature corresponding to beef selected by the user as the type of meat, and inductively heat the cooking vessel 10 at the maximum power level until the temperature of the cooking vessel 10 reaches 250°C. In this case, the induction heating device 2000 may output a notification indicating that preheating is in progress (e.g., 'Preheating' 1715) through the user interface 2500.

When the cooking vessel 10 is sufficiently preheated, the induction heating device 2000 may output guide information instructing to put meat on the cooking vessel 10 and apply the sensor device 1000 to the meat (e.g., 'Put meat on the pan and insert the cook sensor' 1716).

When temperature data of the meat received from the sensor device 1000 indicates that the temperature of the meat reaches a first temperature (e.g., 30 °C), or after a certain time (e.g., 1 minute) from when the meat is put on the cooking vessel 10, the induction heating device 2000 may output guide information instructing to flip the meat and apply the sensor device 1000 to the meat again (e.g., 'Flip meat and insert the cook sensor again' 1717).

When the temperature data of the meat received from the sensor device 1000 indicates that the temperature of the meat reaches a second temperature, the induction heating device 2000 may output a notification indicating that the meat is done (e.g., 'Steak is done' 1718). For example, when the user selects 'Medium' as the doneness of meat, and when the temperature of the meat reaches 54°C, the induction heating device 2000 may output the notification indicating that the meat is done.

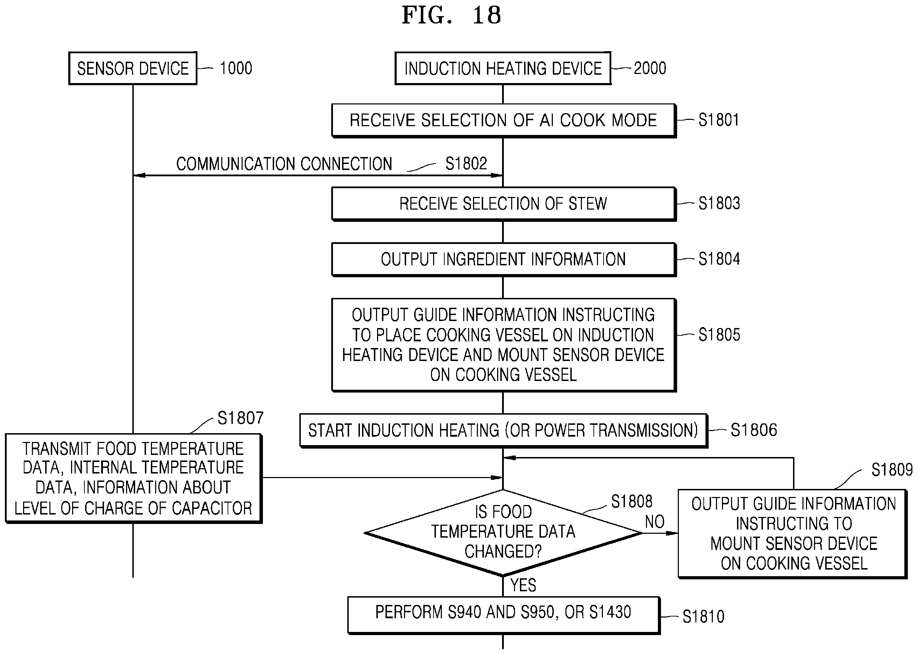

FIG. 18 is a flowchart for describing a method, performed by the induction heating device 2000, of outputting guide information for a stew in association with the sensor device 1000, according to an embodiment of the disclosure.

In operation S1801, the induction heating device 2000 according to an embodiment of the disclosure may receive a user input for selecting an Al cook mode. According to an embodiment of the disclosure, the induction heating device 2000 may receive an input of the user for selecting an Al cook button included in the user interface 2500 of the induction heating device 2000, or a user voice command for selecting the Al cook mode.

In operation S1802, the induction heating device 2000 according to an embodiment of the disclosure may be communicatively connected to the sensor device 1000.

When the user input for selecting the Al cook mode is received, the induction heating device 2000 according to an embodiment of the disclosure may be communicatively connected to the sensor device 1000 by establishing a short-range wireless communication channel therebetween. According to an embodiment of the disclosure, the short-range wireless communication channel may include a Bluetooth communication channel, a WFD communication channel, or a BLE communication channel, but is not limited thereto.

According to an embodiment of the disclosure, when the user input for selecting the Al cook mode is received, the induction heating device 2000 may transmit a communication connection request signal to the sensor device 1000 which is previously paired with the induction heating device 2000. In this case, the sensor device 1000 may switch an operation mode of the communication interface 1030 from a sleep mode to an active mode, and thus the induction heating device 2000 and the sensor device 1000 may be communicatively connected to each other.

In operation S1803, the induction heating device 2000 according to an embodiment of the disclosure may receive an input for selecting a stew.

According to an embodiment of the disclosure, the induction heating device 2000 may provide a GUI for selecting from among types of foods supported by the Al cook mode. The user may select a stew through the GUI.

In operation S1804, the induction heating device 2000 according to an embodiment of the disclosure may output ingredient information of the stew. The ingredient information of the stew may include vegetables, meat, seafood, seasoning, and water, but is not limited thereto.

In operation S1805, the induction heating device 2000 according to an embodiment of the disclosure may output guide information instructing to place the cooking vessel 10 on the induction heating device 2000 and mount the sensor device 1000 on the cooking vessel 10. In this case, the user may mount the sensor device 1000 on the cooking vessel 10 by using the cooking vessel holder 1002 (see FIG. 3A) in such a manner that the first temperature sensor 1010 is inserted into a content of the cooking vessel 10.

In operation S1806, the induction heating device 2000 according to an embodiment of the disclosure may start to inductively heat (or transmit power to) the cooking vessel 10. For example, the induction heating device 2000 may control the inverter circuit 2113 to supply an AC current to the working coil 2120. When the AC current is supplied to the working coil 2120, a magnetic field whose magnitude and direction change with time may be induced in the vicinity of the working coil 2120. The magnetic field in the vicinity of the working coil 2120 may pass through a top plate made of tempered glass, and reach the cooking vessel 10 placed on the top plate. An eddy current rotating around the magnetic field may be generated in the cooking vessel 10 due to the magnetic field whose magnitude and direction change with time, and electric resistance heat may be generated in the cooking vessel 10 due to the eddy current. The cooking vessel 10 may be heated by the electric resistance heat, and thus the content of the cooking vessel 10 may be heated.

According to an embodiment of the disclosure, the induction heating device 2000 may automatically adjust a power level, based on pre-stored recipe information. For example, the induction heating device 2000 may initially transmit power at the maximum power level and then reduce the power level later.

In operation S1807, the sensor device 1000 according to an embodiment of the disclosure may transmit food temperature data, internal temperature data of the sensor device 1000, and information about a level of charge of the capacitor 1060 to the induction heating device 2000.

For example, the sensor device 1000 may measure temperature data of the stew by using the first temperature sensor 1010, and transmit the temperature data of the stew to the induction heating device 2000 in a certain cycle. In this case, the sensor device 1000 may also transmit the internal temperature data of the sensor device 1000 and the information about the level of charge of the capacitor 1060 of the sensor device 1000 to the induction heating device 2000 in a certain cycle.

In operation S1808, the induction heating device 2000 according to an embodiment of the disclosure may determine whether the food temperature data is changed, based on the food temperature data received from the sensor device 1000.

Because the induction heating device 2000 has started to transmit power to the cooking vessel 10, when the sensor device 1000 is properly mounted on the cooking vessel 10, the food temperature measured by the first temperature sensor 1010 may be increased.

In operation S1809, when the food temperature data is not changed (or exhibits a change less than a threshold temperature value), the induction heating device 2000 according to an embodiment of the disclosure may output guide information instructing to mount the sensor device 1000 on the cooking vessel 10 again.

For example, when a result of analyzing the food temperature data received from the sensor device 1000 indicates that the temperature of the food is constantly maintained at room temperature (e.g., 25°C), the sensor device 1000 may not be properly mounted on the cooking vessel 10. Therefore, the induction heating device 2000 may output, through the user interface 2500, the guide information instructing to mount the sensor device 1000 on the cooking vessel 10. When the temperature of the food is slightly increased but is not increased above a certain temperature (e.g., 30 °C) for a certain time (e.g., 5 minutes), the induction heating device 2000 may determine that the sensor device 1000 is not properly mounted on the cooking vessel 10, and output, through the user interface 2500, the guide information instructing to mount the sensor device 1000 on the cooking vessel 10. The guide information may include at least one of an instruction to confirm the position of the sensor device 1000, an instruction to mount the sensor device 1000 on the cooking vessel 10, and an instruction to change the position of the sensor device 1000.

In operation S1810, the induction heating device 2000 according to an embodiment of the disclosure may perform operation S940 of FIG. 9 or operation S1430 of FIG. 14.

When the food temperature data received from the sensor device 1000 is changing, it means that the sensor device 1000 is properly mounted and operated on the cooking vessel 10, and thus the induction heating device 2000 may output cooking guide information to the user, based on the temperature data of the stew and a recipe for the stew.

The induction heating device 2000 may compare the internal temperature data of the sensor device 1000 to reference temperature data, and output notification information about the sensor device 1000 through the user interface 2500 or control the power level of the induction heating device 2000 when the internal temperature data of the sensor device 1000 is increased above the reference temperature data (e.g., 70°C). For example, when the sensor device 1000 falls into the cooking vessel 10, or when heat of the cooking vessel 10 is transferred to the sensor device 1000 due to a problem of the cooking vessel holder 1002, a temperature of an internal component of the sensor device 1000 may be increased. In this case, the induction heating device 2000 may output a notification indicating that the sensor device 1000 is not safe, or control the power level of the induction heating device 2000 to reduce the internal temperature data of the sensor device 1000 below the reference temperature data.

Meanwhile, when the level of charge of the capacitor 1060 of the sensor device 1000 is lower than a threshold value, the induction heating device 2000 may output a notification about the level of charge of the capacitor 1060 of the sensor device 1000. The notification about the level of charge of the capacitor 1060 of the sensor device 1000 may include a notification indicating that the level of charge of the capacitor 1060 is not sufficient, or a notification instructing to charge the capacitor 1060 of the sensor device 1000, but is not limited thereto.

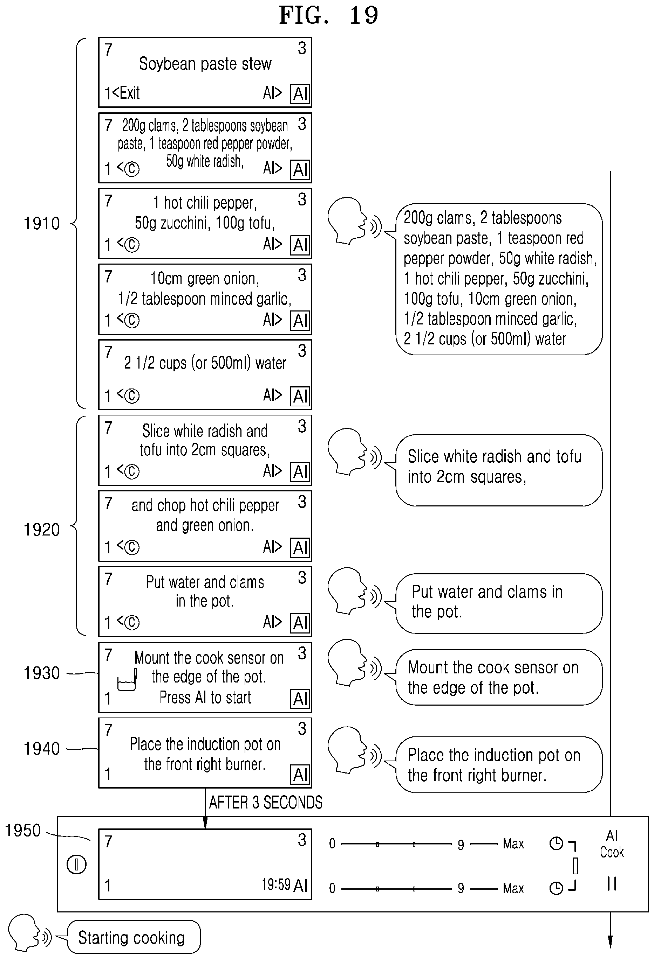

The operation, performed by the induction heating device 2000, of outputting guide information for a stew through the user interface 2500 will now be described in detail with reference to FIG. 19.

FIG. 19 is a diagram for describing an operation, performed by the induction heating device 2000, of outputting guide information for a stew in association with the sensor device 1000, according to an embodiment of the disclosure.

Referring to reference numeral 1910 of FIG. 19, when a user selects an Al cook button and selects a soybean paste stew in a food list, the induction heating device 2000 may output ingredient information of the soybean paste stew through the user interface 2500. For example, the induction heating device 2000 may display '200g clams, 2 tablespoons soybean paste, 1 teaspoon red pepper powder, 50g white radish, 1 hot chili pepper, 50g zucchini, 100g tofu, 10cm green onion, 1/2 tablespoon minced garlic, 2 1/2 cups (or 500ml) water' as the ingredient information of the soybean paste stew on the display 2510. In this case, the ingredient information of the soybean paste stew may be output as a voice signal through the audio outputter 2520 (e.g., a speaker).

Referring to reference numeral 1920 of FIG. 19, the induction heating device 2000 may output information about a method of preparing the ingredients before cooking the stew. For example, the induction heating device 2000 may display information such as 'Slice white radish and tofu into 2cm squares, and chop hot chili pepper and green onion. Put water and clams in the pot' on the display 2510. In this case, the information about the method of preparing the ingredients may be output as a voice signal through the audio outputter 2520 (e.g., a speaker).

Referring to reference numeral 1930 of FIG. 19, the induction heating device 2000 may output guide information instructing to mount the sensor device 1000 on the cooking vessel 10. For example, the induction heating device 2000 may output 'Mount the cook sensor on the edge of the pot' as text on the display 2510, or as voice through the audio outputter 2520 (e.g., a speaker).

Referring to reference numeral 1940 of FIG. 19, the induction heating device 2000 may output guide information instructing to place the cooking vessel 10 with the sensor device 1000 on a top plate of the induction heating device 2000. For example, the induction heating device 2000 may output 'Place the induction pot on the front right burner' as text on the display 2510, or as voice through the audio outputter 2520 (e.g., a speaker).

Referring to reference numeral 1950 of FIG. 19, when the cooking vessel 10 placed on the top plate of the induction heating device 2000 is detected using the vessel detection sensor 2410, the induction heating device 2000 may output a notification indicating that cooking is started. The induction heating device 2000 may start to transmit power to the cooking vessel 10.

According to an embodiment of the disclosure, the user may easily cook various foods according to guide information of the induction heating device 2000.

FIG. 20 is a flowchart for describing a method, performed by the induction heating device 2000, of determining a data transmission cycle of the sensor device 1000, according to an embodiment of the disclosure.

In operation S2010, the sensor device 1000 and the induction heating device 2000 may be communicatively connected to each other. For example, the sensor device 1000 may be communicatively connected to the induction heating device 2000 by establishing a short-range wireless communication channel therebetween. According to an embodiment of the disclosure, the short-range wireless communication channel may include a Bluetooth communication channel, a WFD communication channel, or a BLE communication channel, but is not limited thereto.

In operation S2020, the induction heating device 2000 according to an embodiment of the disclosure may receive a user input for selecting a long-time cooking mode for cooking for more than a certain time.

The long-time cooking mode refers to a mode for cooking for more than the certain time (e.g., 1 hour), and may include various modes such as a steam mode, a sous vide mode, a bone soup mode, a jam mode, and a sweet rice drink mode.

In operation S2030, when the long-time cooking mode is selected, the induction heating device 2000 according to an embodiment of the disclosure may determine a data transmission cycle of the sensor device 1000. When the long-time cooking mode is selected on the induction heating device 2000, the capacitor 1060 of the sensor device 1000 needs to be efficiently managed to use the sensor device 1000 for a long time. Therefore, the induction heating device 2000 may adaptively adjust the data transmission cycle of the sensor device 1000.

According to an embodiment of the disclosure, the induction heating device 2000 may determine the data transmission cycle of the sensor device 1000, based on a cooking time corresponding to the long-time cooking mode. The induction heating device 2000 may divide the total cooking time into a plurality of periods, and determine different data transmission cycles for the plurality of periods. The induction heating device 2000 may determine a short data transmission cycle for an early period and determine a long data transmission cycle for a late period from among the plurality of periods.

For example, the induction heating device 2000 may divide the total cooking time into two periods. The induction heating device 2000 may determine a data transmission cycle of a first period (e.g., a period within 1 hour after cooking is started) as a first cycle (e.g., a cycle of 1 second), and determine a data transmission cycle of a second period (e.g., a period from 1 hour after cooking is started) as a second cycle (e.g., a cycle of 3 seconds).

Alternatively, the induction heating device 2000 may divide the total cooking time into three periods. In this case, the induction heating device 2000 may determine a data transmission cycle of a first period (e.g., a period within 1 hour after cooking is started) as a first cycle (e.g., a cycle of 1 second), determine a data transmission cycle of a second period (e.g., a period from 1 hour to 2 hours after cooking is started) as a second cycle (e.g., a cycle of 3 seconds), and determine a data transmission cycle of a third period (e.g., a period from 2 hours after cooking is started) as a third cycle (e.g., a cycle of 5 seconds).

In operation S2040, the induction heating device 2000 according to an embodiment of the disclosure may transmit information about the data transmission cycle of the sensor device 1000 to the sensor device 1000.

According to an embodiment of the disclosure, the induction heating device 2000 may transmit the information about the data transmission cycle to the sensor device 1000 through short-range wireless communication (e.g., Bluetooth communication).

In operation S2050, the sensor device 1000 according to an embodiment of the disclosure may transmit at least one of food temperature data, internal temperature data, or information about a level of charge of the capacitor 1060 to the induction heating device 2000 according to the data transmission cycle determined by the induction heating device 2000.

For example, when the induction heating device 2000 determines the data transmission cycle of the first period (e.g., a period within 1 hour after cooking is started) as the first cycle (e.g., a cycle of 1 second), and determines the data transmission cycle of the second period (e.g., a period from 1 hour after cooking is started) as a second cycle (e.g., a cycle of 3 seconds), the sensor device 1000 may transmit at least one of the food temperature data, the internal temperature data, or the information about the level of charge of the capacitor 1060 to the induction heating device 2000 in a cycle of 1 second during 1 hour after cooking is started. From 1 hour after cooking is started, the sensor device 1000 may transmit at least one of the food temperature data, the internal temperature data, or the information about the level of charge of the capacitor 1060 to the induction heating device 2000 in a cycle of 3 seconds. In this case, from 1 hour after cooking is started, the data transmission cycle may be increased from 1 second to 3 seconds and thus energy consumption of the capacitor 1060 may be reduced. Therefore, the sensor device 1000 may be used for a long time compared to a case in which the data transmission cycle is maintained as 1 second.

The operation, performed by the induction heating device 2000, of determining the data transmission cycle of the sensor device 1000 will now be described in detail with reference to FIG. 21.

FIG. 21 is a diagram for describing an operation, performed by the induction heating device 2000, of determining a data transmission cycle of the sensor device 1000 in a long-time cooking mode, according to an embodiment of the disclosure.

In operation S2110, the induction heating device 2000 may receive an input for selecting a sous vide mode. Sous vide (French) is a technique for slowly cooking food in a sealed plastic bag in lukewarm water. Sous vide is aimed to evenly heat the outside and inside of food and to retain moisture of food.

The induction heating device 2000 may receive an input for selecting 'Beef' as a type of meat, selecting 'Rare' as doneness, and selecting '2cm' as a thickness of meat. In this case, the induction heating device 2000 may determine to cook for 1 hour and 10 minutes while maintaining a water temperature at 50 °C, based on a pre-stored recipe.

According to an embodiment of the disclosure, because the total cooking time (i.e., 1 hour and 10 minutes) of the sous vide mode exceeds a reference time (e.g., 1 hour), the induction heating device 2000 may determine the sous vide mode as a long-time cooking mode, and determine a data transmission cycle of the sensor device 1000. For example, the induction heating device 2000 may determine the data transmission cycle as a cycle of 1 second for a period within 1 hour after cooking is started, and determine the data transmission cycle as a cycle of 5 seconds for a period from 1 hour after cooking is started.

In operation S2120, the induction heating device 2000 may transmit information about the data transmission cycle of the sensor device 1000. For example, the induction heating device 2000 may transmit, to the sensor device 1000, information instructing to transmit data in a cycle of 1 second within 1 hour after cooking is started, and transmit data in a cycle of 5 seconds from 1 hour after cooking is started.

In operation S2130, the sensor device 1000 may identify the data transmission cycle, based on the information about the data transmission cycle received from the induction heating device 2000. For example, the sensor device 1000 may identify that the data transmission cycle within 1 hour after cooking is started is a cycle of 1 second and that the data transmission cycle from 1 hour after cooking is started is a cycle of 5 seconds.

In operation S2140, the sensor device 1000 may transmit at least one of food temperature data, internal temperature data, or information about a level of charge of the capacitor 1060 to the induction heating device 2000 according to the data transmission cycle.

For example, the sensor device 1000 may transmit at least one of the food temperature data, the internal temperature data, or the information about the level of charge of the capacitor 1060 to the induction heating device 2000 in a cycle of 1 second within 1 hour after cooking is started. From 1 hour after cooking is started, the sensor device 1000 may transmit at least one of the food temperature data, the internal temperature data, or the information about the level of charge of the capacitor 1060 to the induction heating device 2000 in a cycle of 5 seconds.

According to an embodiment of the disclosure, when the induction heating device 2000 adjusts the data transmission cycle of the sensor device 1000 according a cooking time, energy consumption of the capacitor 1060 of the sensor device 1000 may be reduced and thus the sensor device 1000 may be used while cooking for a long time.

FIG. 22 is a diagram for describing an operation, performed by the induction heating device 2000, in association with the sensor device 1000, according to an embodiment of the disclosure.

Referring to FIG. 22, the cooking system 100 according to an embodiment of the disclosure may further include a server device 3000 and a display device 4000 in addition to the sensor device 1000 and the induction heating device 2000. The cooking system 100 including the sensor device 1000 and the induction heating device 2000 is described above in relation to FIG. 1, and thus the server device 3000 and the display device 4000 will now be described.

According to an embodiment of the disclosure, the server device 3000 may include a communication interface for communicating with an external device. The server device 3000 may communicate with the induction heating device 2000 or the display device 4000 through the communication interface. According to an embodiment of the disclosure, the induction heating device 2000 may access the server device 3000 by transmitting identification information of the induction heating device 2000 or identification information of a user (e.g., login information or account information) to the server device 3000, and receiving an authentication of the identification information of the induction heating device 2000 or the identification information of the user (e.g., login information or account information) from the server device 3000.

According to an embodiment of the disclosure, the server device 3000 may include an Al processor. The Al processor may create an Al model for recommending user-specific dishes, by training an artificial neural network. 'Training' the artificial neural network may mean creating a mathematical model in which connections of neurons in the artificial neural network may make optimal decisions by appropriately changing weights on the basis of data.

The display device 4000 according to an embodiment of the disclosure may be a device connected to the server device 3000 to display information provided from the server device 3000. According to an embodiment of the disclosure, the display device 4000 may transmit and receive information to and from the server device 3000 through a specific application installed in the display device 4000 (e.g., a home appliance manager application).

According to an embodiment of the disclosure, the display device 4000 may be a device connected with the same account information as the induction heating device 2000. The display device 4000 may be directly connected to the induction heating device 2000 through a short-range wireless communication channel, or be indirectly connected to the induction heating device 2000 via the server device 3000.

The display device 4000 according to an embodiment of the disclosure may be implemented in various forms. For example, the display device 4000 described herein may be a mobile device, a refrigerator including a display, a television (TV), a computer, or an oven including a display, but is not limited thereto. The mobile device may include a smartphone, a laptop computer, a tablet personal computer (PC), a digital camera, an e-book reader, a digital broadcast receiver, a personal digital assistant (PDA), a portable multimedia player (PMP), a navigation system, or an MP3 player, but is not limited thereto. For example, the mobile device may be a wearable device worn by a user. For convenience of explanation, the display device 4000 will be representatively described as a smartphone below.

According to an embodiment of the disclosure, the induction heating device 2000 may receive, from the sensor device 1000, food temperature data (e.g., 40°C) measured by the first temperature sensor 1010 (S2210). For example, the induction heating device 2000 may receive the food temperature data from the sensor device 1000 through short-range wireless communication (e.g., Bluetooth communication). In this case, according to an embodiment of the disclosure, the induction heating device 2000 may transmit the food temperature data (e.g., 40°C) to the server device 3000 (S2220). For example, the induction heating device 2000 may transmit the food temperature data (e.g., 40°C) to the server device 3000 through an external access network (e.g., Wi-Fi).

According to an embodiment of the disclosure, the display device 4000 may execute a specific application provided by the server device 3000 (e.g., a home appliance manager application), based on a user input. In this case, a user may check a current cooking mode (e.g., Customized Al cook_Sous vide), currently used cooking zone information (e.g., 'ON' displayed on the rear left cooking zone), or a current food temperature (e.g., 40°C) on a screen of the application.

Meanwhile, according to an embodiment of the disclosure, the display device 4000 may receive, from the induction heating device 2000, information indicating that internal temperature data of the sensor device 1000 is higher than or equal to reference temperature data. The display device 4000 may receive the information about the internal temperature data of the sensor device 1000 from the induction heating device 2000 through short-range wireless communication or via the server device 3000. When the internal temperature data of the sensor device 1000 is higher than or equal to the reference temperature data, the display device 4000 may output notification information about the sensor device 1000. The notification information about the sensor device 1000 may include a notification indicating that the internal temperature data of the sensor device 1000 is increased above the reference temperature data, a notification instructing to check a position of the sensor device 1000, or a notification instructing to change the position of the sensor device 1000, but is not limited thereto.

The method according to an embodiment of the disclosure may be implemented in the form of program commands executable by various computer means and be recorded on a computer-readable medium. The computer-readable medium may include program commands, data files, data structures, or a combination thereof. The program commands recorded on the medium may be those specially designed and configured for the disclosure, or those known to and usable by one of ordinary skill in the art of computer software. Examples of the computer-readable recording medium include magnetic media (e.g., hard disks, floppy disks, and magnetic tape), optical media (e.g., CD-ROMs and DVDs), magneto-optical media (e.g., floptical disks), and hardware devices (e.g., ROMs, RAMs, and flash memories) that are specially configured to store and execute program commands. Examples of the program commands include both machine code, such as produced by a compiler, and high-level language code that may be executed by the computer using an interpreter.

An embodiment of the disclosure may be implemented in the form of a recording medium including computer-executable instructions, e.g., program modules executed by the computer. The computer-readable medium may be an arbitrary available medium that can be accessed by the computer, and examples thereof include all of volatile, non-volatile, detachable, and non-detachable media. The computer-readable medium may include both of a computer storage medium and a communication medium. Examples of the computer storage medium include all of volatile, non-volatile, detachable, and non-detachable media implemented using an arbitrary method or technology for storing information such as computer-readable instructions, data structures, program modules, or other data. The communication medium typically includes computer-readable instructions, data structures, program modules, other data in modulated data signals such as carrier waves, or other transmission mechanisms, and includes an arbitrary information delivery medium. An embodiment of the disclosure may also be implemented in the form of a computer program or a computer program product including computer-executable instructions, e.g., computer programs executed by the computer.

A machine-readable storage medium may be provided in the form of a non-transitory storage medium. When the storage medium is 'non-transitory', it means that the storage medium is tangible and does not include signals (e.g., electromagnetic waves), and it does not limit that data is semi-permanently or temporarily stored in the storage medium. For example, the 'non-transitory storage medium' may include a buffer for temporarily storing data.

According to an embodiment of the disclosure, the method according to various embodiments of the disclosure may be included and provided in a computer program product. The computer program product may be traded as a product between sellers and purchasers. The computer program product may be distributed in the form of a machine-readable storage medium (e.g., a compact disc read only memory (CD-ROM)), or be electronically distributed (e.g., downloaded or uploaded) via an application store or directly between two user devices (e.g., smartphones). For electronic distribution, at least a part of the computer program product (e.g., a downloadable app) may be temporarily generated or be at least temporarily stored in a machine-readable storage medium, e.g., a server of a manufacturer, a server of an application store, or a memory of a relay server.

## Claims

1. A sensor device comprising:
a first temperature sensor configured to measure a temperature of a food while in contact with the food, the food being in a cooking vessel on an induction heating device;
a second temperature sensor configured to measure an internal temperature of the sensor device;
a communication interface configured to transmit, to the induction heating device, data indicating the temperature of the food measured by the first temperature sensor and data indicating the internal temperature of the sensor device measured by the second temperature sensor; and
at least one processor configured to control the communication interface to transmit the data indicating the temperature of the food measured by the first temperature sensor and the data indicating the internal temperature of the sensor device measured by the second temperature sensor to the induction heating device.

2. The sensor device of claim 1, further comprising:
a sensor body housing the first temperature sensor, the second temperature sensor, the communication interface, and the at least one processor; and
a charger including a transmitter coil configured to wirelessly transmit energy,
wherein the sensor body further comprises:
a receiver coil configured to wirelessly receive energy transmitted by the transmitter coil, and
a capacitor configured to store the received energy.

3. The sensor device of claim 2, wherein the capacitor comprises a supercapacitor.

4. The sensor device of claim 2, wherein the second temperature sensor is positioned within a preset distance from the capacitor.

5. The sensor device of claim 2, wherein
the sensor body is configured to be insertable into an internal cavity of the charger,
the transmitter coil is wound along an axis direction,
the receiver coil is wound along a same axis direction as the transmitter coil, and
the transmitter coil is positioned such that, when the sensor body is inserted into the internal cavity of the charger, the transmitter coil is outside the receiver coil.

6. The sensor device of claim 2, wherein
the charger further comprises a charging surface in which the transmitter coil is wound in an oval shape, and
the sensor body is mountable in the charger, and
the receiver coil is wound in an oval shape in the sensor body at a position that, when the sensor body is mounted in the charger and in contact with the charging surface, the receiver coil is aligned with the transmitter coil.

7. The sensor device of claim 2, wherein the sensor body is configured to transmit information about a level of charge of the capacitor to the charger through power frequency communication.

8. The sensor device of claim 7, wherein the charger further comprises:
an output interface configured to display the information about the level of charge of the capacitor.

9. The sensor device of claim 8, wherein, when the capacitor is charged, the output interface is further configured to:
output a first color when the level of charge of the capacitor is lower than or equal to a first threshold value,
output a second color, different from the first color, when the level of charge of the capacitor is higher than the first threshold value and lower than a second threshold value that is higher than the first threshold value, and
output a third color, different from the first color and from the second color, when the level of charge of the capacitor is equal to or higher than the second threshold value.

10. The sensor device of claim 2, wherein the at least one processor is further configured to:
identify a level of charge of the capacitor; and
transmit, through the communication interface, information about the identified level of charge of the capacitor to the induction heating device.

11. The sensor device of claim 1, wherein the at least one processor is further configured to:
receive, through the communication interface, information about a data transmission cycle from the induction heating device; and
control the communication interface to transmit the data indicating the temperature of the food as measured by the first temperature sensor and the data indicating the internal temperature of the sensor device as measured by the second temperature sensor to the induction heating device according to the received information about the data transmission cycle.

12. The sensor device of claim 11, wherein the data transmission cycle is based on a cooking time of a cooking mode of the induction heating device.

13. A cooking system comprising:
an induction heating device; and
a sensor device including:
a first temperature sensor configured to measure a temperature of food in a cooking vessel on the induction heating device,
a second temperature sensor configured to measure an internal temperature of the sensor device,
a first communication interface configured to transmit, to the induction heating device, data indicating the temperature of the food as measured by the first temperature sensor and data indicating internal temperature of the sensor device as measured by the second temperature sensor, and
at least one first processor configured to control the first communication interface to transmit the data indicating the temperature of food as measured by the first temperature sensor and the data indicating the internal temperature of the sensor device as measured by the second temperature sensor to the induction heating device,
wherein the induction heating device includes:
a second communication interface configured to receive the transmitted data indicating the temperature of the food and the data indicating the internal temperature of the sensor device, and
at least one second processor configured to control the operation of the induction heating device based on the received data indicating the temperature of the food and the data indicating the internal temperature of the sensor device, wherein the operation includes at least one of:
providing a notification to a user through a user interface when the received data indicating internal temperature of the sensor device is higher than or equal to a preset reference temperature data, and
controlling a power level of the induction heating device when the received data indicating the internal temperature of the sensor device is higher than or equal to a preset reference temperature data.

14. The cooking system of claim 13, wherein
the sensor device further comprises:
a sensor body housing the first temperature sensor, the second temperature sensor, the first communication interface, and the at least one first processor; and
a charger including a transmitter coil configured to wirelessly transmit energy, and
the sensor body further comprises:
a receiver coil configured to wirelessly receive energy the transmitted by the transmitter coil; and
a capacitor configured to store the received energy.

15. The cooking system of claim 14, wherein the second temperature sensor is positioned within a preset distance from the capacitor.
